# EUROPEAN PATENT APPLICATION

(11) **EP 4 787 749 A1**
(43) Date of publication of application: **05.08.2026**
(21) Application number: 26154269.0
(22) Date of filing: 27.01.2026
(51) Int. Cl.: H04L 1/00, H04L 1/24

(54) **COMMUNICATION METHOD, DEVICE, AND SYSTEM**

(30) Priority: 27.01.2025 CN 202510127462
(71) Applicant: Huawei Technologies Co., Ltd., Shenzhen, Guangdong 518129 (CN)
(72) Inventor: NIE, Er, Shenzhen, 518129 (CN)
(74) Representative: Körber, Martin Hans

(57) **Abstract**

A communication method, device, and system are provided, and belong to the field of communication technologies. The method includes: When a link from a first device to a second device is in a service bitstream transmission state, the first device sends a first control bitstream that includes a first error correction encoding mode to the second device, and then the first device receives a service bitstream that is sent by the second device and that is encoded in the first error correction encoding mode. This application can resolve a problem that a service bitstream cannot be transmitted when a device enters a training state to set an encoding mode. This application is used to set an error correction encoding mode of a service bitstream when a link is in a service bitstream transmission state.

## Description

### TECHNICAL FIELD

This application relates to the field of communication technologies, and in particular, to a communication method, device, and system.

### BACKGROUND

In a communication system, communication devices may communicate with each other by transmitting a service bitstream. However, when the service bitstream is transmitted between the communication devices, a bit error may occur during service bitstream transmission due to impact of a transmission condition.

In a related technology, to reduce a bit error ratio of a service bitstream, a communication device needs to first enter a training state, to select an appropriate encoding mode for the service bitstream, and set the service bitstream to be encoded in the encoding mode. Then, the communication device exits the training state. In addition, the communication device that needs to send the service bitstream encodes the service bitstream in the encoding mode that is just set, and a communication device that receives the service bitstream may decode the service bitstream in a decoding mode corresponding to the encoding mode.

However, in a process in which the communication device enters the training state to set the encoding mode, the service bitstream cannot be transmitted, causing a large impact on a service.

### SUMMARY

This application provides a communication method, device, and system, to resolve a problem that a service bitstream cannot be transmitted in a process in which a communication device enters a training state to set an encoding mode. Solutions provided in this application are as follows.

According to a first aspect, a communication method is provided. The method includes: When a link from a first device to a second device is in a service bitstream transmission state, the first device sends a first control bitstream that includes a first error correction encoding mode to the second device, and then the first device receives a service bitstream that is sent by the second device and that is encoded in the first error correction encoding mode.

It can be learned from the foregoing content that when the link from the first device to the second device is in the service bitstream transmission state, the first device may send the first control bitstream to the second device, to indicate the second device to encode the service bitstream in the first error correction encoding mode. This implements setting of the first error correction encoding mode. In this way, the first device does not need to suspend transmission of a service bitstream to enter a training state. This can avoid a problem that the first device cannot transmit the service bitstream to the second device when the first device enters the training state, and reduce impact of setting the error correction encoding mode on a service from the first device to the second device.

Optionally, before the first device sends the first control bitstream to the second device, when the link from the first device to the second device is in the service bitstream transmission state, the first device may further send a second control bitstream to the second device, where the second control bitstream includes a second error correction encoding mode; the first device may receive a third control bitstream sent by the second device, where the third control bitstream includes a third error correction encoding mode; and then, the first device may select one mode from the second error correction encoding mode and the third error correction encoding mode as the first error correction encoding mode. It can be learned that the first device and the second device may determine the first error correction encoding mode through negotiation.

In this negotiation process, it is assumed that the third error correction encoding mode is an error correction encoding mode with a stronger error correction capability in the second error correction encoding mode and an error correction encoding mode used by the second device, and the first error correction encoding mode is an error correction encoding mode with a stronger error correction capability in the second error correction encoding mode and the third error correction encoding mode. If an error correction capability of the error correction encoding mode used by the second device is stronger than an error correction capability of the second error correction encoding mode, the first error correction encoding mode can be the third error correction encoding mode (the error correction encoding mode used by the second device) through negotiation. In addition, because an error correction encoding mode originally used by the second device is the first error correction encoding mode, the second device does not need to switch the used error correction encoding mode after receiving the first control bitstream. In this way, the second device can send, to the first device, the service bitstream encoded in the first error correction encoding mode more efficiently.

Certainly, when the third error correction encoding mode is the error correction encoding mode with the stronger error correction capability in the second error correction encoding mode and the error correction encoding mode used by the second device, the first error correction encoding mode may alternatively not be the error correction encoding mode with the stronger error correction capability in the second error correction encoding mode and the third error correction encoding mode. When the first error correction encoding mode is the error correction encoding mode with the stronger error correction capability in the second error correction encoding mode and the third error correction encoding mode, the third error correction encoding mode may alternatively not be the error correction encoding mode with the stronger error correction capability in the second error correction encoding mode and the error correction encoding mode used by the second device.

Optionally, before the first device sends the second control bitstream to the second device, the first device may receive a test bitstream sent by the second device, determine a parameter of a link from the second device to the first device based on the test bitstream, and determine the second error correction encoding mode based on the parameter of the link from the second device to the first device. The second error correction encoding mode is an error correction encoding mode selected from a plurality of error correction encoding modes based on the parameter of the link from the second device to the first device, and the first error correction encoding mode is obtained through negotiation based on the second error correction encoding mode. Therefore, the first error correction encoding mode is an error correction encoding mode that better adapts to the link from the second device to the first device in the plurality of error correction encoding modes. Therefore, the first error correction encoding mode matches the link from the second device to the first device well. In this way, a problem of a high bit error ratio or large power consumption delay caused by low matching between the error correction encoding mode used by the second device and the link from the second device to the first device can be avoided.

Optionally, the test bitstream is any one of a plurality of bitstreams. Before sending the test bitstream to the first device, the second device may further send a fifth control bitstream that includes an identifier of the test bitstream to the first device. Then, the first device may receive, based on the identifier of the test bitstream, the test bitstream sent by the second device. In this case, the test bitstream can be flexibly switched among the plurality of bitstreams.

Optionally, a control bitstream (for example, the first control bitstream or the third control bitstream) sent by the first device to the second device is inserted into the service bitstream sent by the first device to the second device. The first device may send the service bitstream to the second device in a service bitstream sending periodicity, and the first device may further send the control bitstream to the second device in a non-service bitstream sending periodicity (the non-service bitstream sending periodicity is also a control bitstream sending periodicity). In this case, the first control bitstream is inserted into the service bitstream sent by the first device to the second device. When sending the first control bitstream to the second device, the first device may send the first control bitstream to the second device based on the periodicity in which the first device sends the service bitstream to the second device. It may be understood that the first device may alternatively not periodically send the service bitstream to the second device. In this case, the first device may not send the first control bitstream to the second device based on the periodicity in which the first device sends the service bitstream to the second device.

Optionally, after receiving the service bitstream that is sent by the second device and that is encoded in the first error correction encoding mode, the first device may further decode the service bitstream sent by the second device in a decoding mode corresponding to the first error correction encoding mode.

After setting the error correction encoding mode used by the second device to the first error correction encoding mode, the second device may send a fourth control bitstream to the first device, where the fourth control bitstream indicates that the second device has encoded the service bitstream in the first error correction encoding mode. Then, the first device may decode, based on the fourth control bitstream in the decoding mode corresponding to the first error correction encoding mode, the service bitstream sent by the second device. For example, the first device may set, based on the fourth control bitstream, an error correction decoding mode used by the first device to the decoding mode corresponding to the first error correction encoding mode, and then may decode, in the decoding mode corresponding to the first error correction encoding mode, the service bitstream sent by the second device. In this way, after the second device sets the error correction encoding mode to the first error correction encoding mode, the first device sets the error correction decoding mode to a first error correction decoding mode, so that the first device can decode the service bitstream that is sent by the second device and that is encoded in the first error correction encoding mode.

Optionally, before the first device sends any control bitstream (for example, the first control bitstream) to the second device, when the link from the first device to the second device is in the service bitstream transmission state, the first device may further send a sixth control bitstream to the second device, where the sixth control bitstream includes the periodicity in which the first device sends the service bitstream to the second device (or a periodicity in which the first device sends the control bitstream to the second device). The periodicity in which the first device sends the service bitstream to the second device (or the periodicity in which the first device sends the control bitstream to the second device) is one of a plurality of periodicities. Then, the second device may receive, based on the periodicity included in the sixth control bitstream, the service bitstream and the control bitstream that are sent by the first device. In this way, the periodicity in which the first device sends the service bitstream to the second device (or the periodicity in which the first device sends the control bitstream to the second device) can be flexibly switched among the plurality of periodicities.

Optionally, the first control bitstream includes a header and a payload that are sequentially transmitted. The header is used to locate a start location and an end location of the first control bitstream, and the payload includes the first error correction encoding mode. For example, the payload includes a control type field and a control content field. The control type field includes a type of content included in the control content field, and the control content field includes the first error correction encoding mode. The control type field is transmitted before the control content field, or the control type field is transmitted after the control content field. The header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) *= x*¹⁰ + *x*⁸ *+ x*⁵ + *x*⁴ + *x*² *+x+*1, where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

According to a second aspect, a communication method is provided. The method includes: When a link from a first device to a second device is in a service bitstream transmission state, the second device receives a first control bitstream that includes a first error correction encoding mode and that is sent by the first device; and then the second device sends, to the first device, a service bitstream encoded in the first error correction encoding mode.

Optionally, before the second device receives the first control bitstream sent by the first device, the method further includes: When the link from the first device to the second device is in the service bitstream transmission state, the second device receives a second control bitstream sent by the first device, where the second control bitstream includes a second error correction encoding mode; and the second device sends a third control bitstream to the first device, where the third control bitstream includes a third error correction encoding mode. The first error correction encoding mode is a mode selected by the first device from the second error correction encoding mode and the third error correction encoding mode.

Optionally, the method meets at least one of the following conditions: the third error correction encoding mode is a mode with a stronger error correction capability in the second error correction encoding mode and an error correction encoding mode used by the second device; and the first error correction encoding mode is a mode with a stronger error correction capability in the second error correction encoding mode and the third error correction encoding mode.

Optionally, before the second device receives the second control bitstream sent by the first device, the second device may further send a test bitstream to the first device. The second error correction encoding mode is determined based on a parameter of a link from the second device to the first device. The parameter of the link from the second device to the first device is determined based on the test bitstream.

Optionally, the test bitstream is any one of a plurality of bitstreams. Before sending the test bitstream to the first device, the second device may further send a fifth control bitstream that includes an identifier of the test bitstream to the first device. Then, the first device may receive, based on the identifier of the test bitstream, the test bitstream sent by the second device. In this case, the test bitstream can be flexibly switched among the plurality of bitstreams.

Optionally, the first control bitstream is inserted into a service bitstream sent by the first device to the second device, and the second device may receive, based on a periodicity in which the first device sends the service bitstream to the second device, the first control bitstream sent by the first device.

Optionally, after the second device receives the first control bitstream sent by the first device, the second device may further send a fourth control bitstream to the first device, where the fourth control bitstream indicates that the second device has encoded the service bitstream in the first error correction encoding mode.

Optionally, before the first device sends any control bitstream (for example, the first control bitstream) to the second device, when the link from the first device to the second device is in the service bitstream transmission state, the first device may further send a sixth control bitstream to the second device, where the sixth control bitstream includes the periodicity in which the first device sends the service bitstream to the second device (or a periodicity in which the first device sends the control bitstream to the second device). The periodicity in which the first device sends the service bitstream to the second device (or the periodicity in which the first device sends the control bitstream to the second device) is one of a plurality of periodicities. Then, the second device may receive, based on the periodicity included in the sixth control bitstream, the service bitstream and the control bitstream that are sent by the first device. In this way, the periodicity in which the first device sends the service bitstream to the second device (or the periodicity in which the first device sends the control bitstream to the second device) can be flexibly switched among the plurality of periodicities.

Optionally, the first control bitstream includes a header and a payload that are sequentially transmitted. The header is used to locate a start location and an end location of the first control bitstream, and the payload indicates a target mode.

Optionally, the payload includes a control type field and a control content field. The control type field includes a type of content included in the control content field, and the control content field includes the first error correction encoding mode.

Optionally, the header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) = *x*¹⁰ *+x*⁸ + *x*⁵ + *x*⁴ + *x*² *+x+*1*,* where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

According to a third aspect, a communication method is provided. The method includes: When a link from a second device to a first device is in a service bitstream transmission state, the second device sends a first control bitstream that includes a first error correction encoding mode to the first device; and then the second device sends, to the first device, a service bitstream encoded in the first error correction encoding mode.

Optionally, before the second device sends the first control bitstream to the first device, when the link from the second device to the first device is in the service bitstream transmission state, the second device may further send a second control bitstream to the first device, where the second control bitstream includes a second error correction encoding mode. The second device may receive a third control bitstream sent by the first device, where the third control bitstream includes a third error correction encoding mode. Then, the second device may select one mode from the second error correction encoding mode and the third error correction encoding mode as the first error correction encoding mode.

The third error correction encoding mode is an error correction encoding mode with a stronger error correction capability in the second error correction encoding mode and an error correction encoding mode used by the first device, and the first error correction encoding mode is an error correction encoding mode with a stronger error correction capability in the second error correction encoding mode and the third error correction encoding mode. Certainly, when the third error correction encoding mode is the error correction encoding mode with the stronger error correction capability in the second error correction encoding mode and the error correction encoding mode used by the first device, the first error correction encoding mode may alternatively not be an error correction encoding mode with a stronger error correction capability in the second error correction encoding mode and the third error correction encoding mode. When the first error correction encoding mode is the error correction encoding mode with the stronger error correction capability in the second error correction encoding mode and the third error correction encoding mode, the third error correction encoding mode may alternatively not be the error correction encoding mode with the stronger error correction capability in the second error correction encoding mode and the error correction encoding mode used by the first device.

Optionally, before the second device sends the second control bitstream to the first device, the first device may receive a test bitstream sent by the second device, determine a parameter of the link from the second device to the first device based on the test bitstream, and send, to the second device, a ninth control bitstream that includes the parameter of the link from the second device to the first device. Then, the second device can determine the second error correction encoding mode based on the parameter of the link from the second device to the first device.

Optionally, the test bitstream is any one of a plurality of bitstreams. Before sending the test bitstream to the first device, the second device may further send a fifth control bitstream that includes an identifier of the test bitstream to the first device. Then, the first device may receive, based on the identifier of the test bitstream, the test bitstream sent by the second device.

Optionally, a control bitstream (for example, the first control bitstream or the third control bitstream) sent by the second device to the first device is inserted into the service bitstream sent by the second device to the first device. The second device may send the service bitstream to the first device in a service bitstream sending periodicity, and the second device may further send the control bitstream to the first device in a non-service bitstream sending periodicity (the non-service bitstream sending periodicity is also a control bitstream sending periodicity). In this case, the first control bitstream is inserted into the service bitstream sent by the second device to the first device. When sending the first control bitstream to the first device, the second device may send the first control bitstream to the first device based on the periodicity in which the second device sends the service bitstream to the first device.

After setting a used error correction decoding mode to a decoding mode corresponding to the first error correction encoding mode, the first device may send a fourth control bitstream to the second device, where the fourth control bitstream indicates that the first device has decoded the service bitstream in the decoding mode corresponding to the first error correction encoding mode. Then, the second device may encode the service bitstream based on the fourth control bitstream in the first error correction encoding mode.

Optionally, before the second device sends any control bitstream (for example, the first control bitstream) to the first device, when the link from the second device to the first device is in the service bitstream transmission state, the second device may further send a sixth control bitstream to the first device, where the sixth control bitstream includes the periodicity in which the second device sends the service bitstream to the first device (or a periodicity in which the second device sends the control bitstream to the first device). The periodicity in which the second device sends the service bitstream to the first device (or the periodicity in which the second device sends the control bitstream to the first device) is one of a plurality of periodicities. Then, the first device may receive, based on the periodicity included in the sixth control bitstream, the service bitstream and the control bitstream that are sent by the second device.

Optionally, the first control bitstream includes a header and a payload that are sequentially transmitted. The header is used to locate a start location and an end location of the first control bitstream, and the payload includes the first error correction encoding mode. For example, the payload includes a control type field and a control content field. The control type field includes a type of content included in the control content field, and the control content field includes the first error correction encoding mode. The control type field is transmitted before the control content field, or the control type field is transmitted after the control content field. The header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) = *x*¹⁰ + *x*⁸ + *x*⁵ + *x*⁴ + *x*² *+x*+1, where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

According to a fourth aspect, a communication method is provided. The method includes: When a link from a second device to a first device is in a service bitstream transmission state, the first device receives a first control bitstream that includes a first error correction encoding mode and that is sent by the second device; and then the first device receives a service bitstream that is encoded in the first error correction encoding mode and that is sent by the second device, and decodes the service bitstream in a decoding mode corresponding to the first error correction encoding mode.

Optionally, before the first device receives the first control bitstream that includes the first error correction encoding mode and that is sent by the second device, the method further includes: When the link from the second device to the first device is in the service bitstream transmission state, the first device receives a second control bitstream sent by the second device, where the second control bitstream includes a second error correction encoding mode; and the first device sends a third control bitstream to the second device, where the third control bitstream includes a third error correction encoding mode. The first error correction encoding mode is a mode selected by the second device from the second error correction encoding mode and the third error correction encoding mode.

Optionally, the method meets at least one of the following conditions: the third error correction encoding mode is a mode with a stronger error correction capability in the second error correction encoding mode and an error correction encoding mode used by the second device; and the first error correction encoding mode is a mode with a stronger error correction capability in the second error correction encoding mode and the third error correction encoding mode.

Optionally, before the first device receives the second control bitstream sent by the second device, the second device may further send a test bitstream to the first device. The first device may further determine a parameter of the link from the second device to the first device based on the test bitstream, and send, to the second device, a ninth control bitstream that includes the parameter of the link from the second device to the first device. Then, the second device can determine the second error correction encoding mode based on the parameter of the link from the second device to the first device.

Optionally, the test bitstream is any one of a plurality of bitstreams. Before sending the test bitstream to the first device, the second device may further send a fifth control bitstream that includes an identifier of the test bitstream to the first device. Then, the first device may receive, based on the identifier of the test bitstream, the test bitstream sent by the second device.

Optionally, the first control bitstream is inserted into the service bitstream sent by the second device to the first device, and the first device may receive, based on a periodicity in which the second device sends the service bitstream to the first device, the first control bitstream sent by the second device.

Optionally, after the first device receives the first control bitstream sent by the second device, the first device may further send a fourth control bitstream to the second device, where the fourth control bitstream indicates that the first device has decoded the service bitstream in the decoding mode corresponding to the first error correction encoding mode.

Optionally, before the second device sends any control bitstream (for example, the first control bitstream) to the first device, when the link from the second device to the first device is in the service bitstream transmission state, the second device may further send a sixth control bitstream to the first device, where the sixth control bitstream includes the periodicity in which the second device sends the service bitstream to the first device (or a periodicity in which the second device sends the control bitstream to the first device). The periodicity in which the second device sends the service bitstream to the first device (or the periodicity in which the second device sends the control bitstream to the first device) is one of a plurality of periodicities. Then, the first device may receive, based on the periodicity included in the sixth control bitstream, the service bitstream and the control bitstream that are sent by the second device.

Optionally, the first control bitstream includes a header and a payload that are sequentially transmitted. The header is used to locate a start location and an end location of the first control bitstream, and the payload indicates a target mode.

Optionally, the payload includes a control type field and a control content field. The control type field includes a type of content included in the control content field, and the control content field includes the first error correction encoding mode.

Optionally, the header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) *= x*¹⁰ + *x*⁸ + *x*⁵ + *x*⁴ + *x*² *+x*+1, where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

According to a fifth aspect, a first device is provided. The first device includes modules configured to perform the communication method provided in any design in the first aspect or the fourth aspect.

According to a sixth aspect, a second device is provided. The second device includes modules configured to perform the communication method provided in any design in the second aspect or the third aspect.

According to a seventh aspect, a communication device is provided. The communication device includes a processor and a memory. The memory stores instructions. The processor is configured to execute the instructions to implement the communication method according to any design of the first aspect, the second aspect, the third aspect, or the fourth aspect.

According to an eighth aspect, a communication system is provided. The communication system includes a first device and a second device.

The first device is configured to perform the communication method according to any design of the first aspect, and the second device is configured to perform the communication method according to any design of the second aspect. Alternatively, the first device is configured to perform the communication method according to any design of the fourth aspect, and the second device is configured to perform the communication method according to any design of the third aspect.

According to a ninth aspect, a computer-readable storage medium is provided. The computer-readable storage medium stores instructions. When the instructions are executed by a computer, the communication method according to any design of the first aspect, the second aspect, the third aspect, or the fourth aspect is implemented.

According to a tenth aspect, a chip is provided. The chip includes a programmable logic circuit and program instructions. The programmable logic circuit is configured to execute the program instructions to implement the communication method according to any design of the first aspect, the second aspect, the third aspect, or the fourth aspect.

For effects of the second aspect to the tenth aspect, refer to the effects of corresponding designs in the first aspect. Details are not described herein in this application.

### BRIEF DESCRIPTION OF DRAWINGS

FIG. 1 is a diagram of a communication system according to an embodiment of this application;
FIG. 2 is a flowchart of a communication method according to an embodiment of this application;
FIG. 3 is a diagram of a periodicity change of a first control bitstream according to an embodiment of this application;
FIG. 4 is a diagram of a first service bitstream and a first control bitstream according to an embodiment of this application;
FIG. 5 is a diagram of codewords of a control bitstream according to an embodiment of this application;
FIG. 6 is a diagram of a structure of a control bitstream according to an embodiment of this application;
FIG. 7 is a diagram of a structure of a communication device according to an embodiment of this application;
FIG. 8 is a diagram of a first device according to an embodiment of this application;
FIG. 9 is a diagram of a second device according to an embodiment of this application;
FIG. 10 is a diagram of another second device according to an embodiment of this application;
FIG. 11 is a diagram of another first device according to an embodiment of this application; and
FIG. 12 is a diagram of another communication device according to an embodiment of this application.

### DESCRIPTION OF EMBODIMENTS

To make technical solutions of this application clearer, the following further describes implementations of this application in detail with reference to accompanying drawings.

This application provides a communication system. The communication system includes a plurality of communication devices, there are links between the communication devices, and the communication devices may communicate with each other over the links.

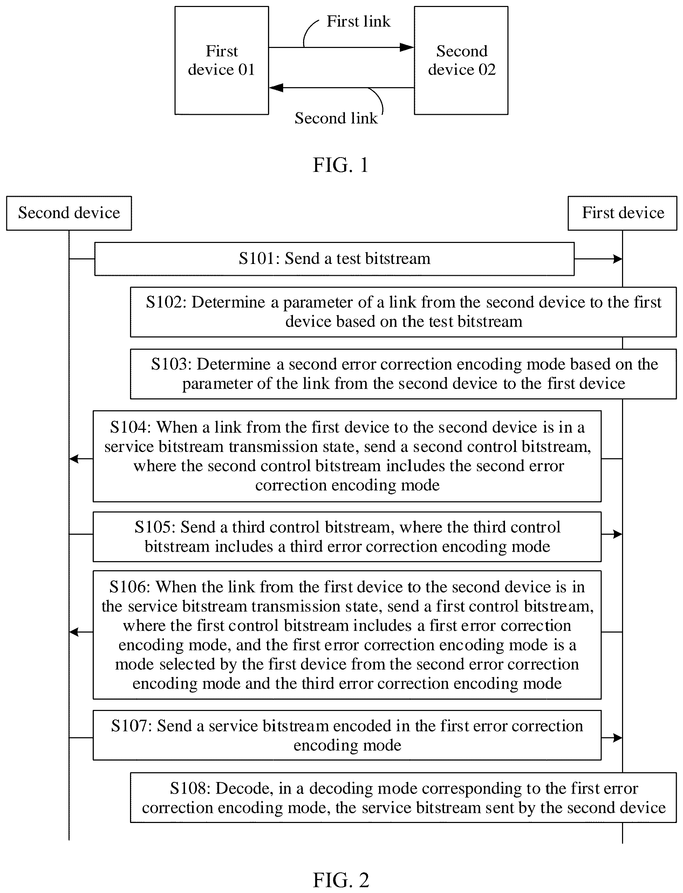

For example, as shown in FIG. 1, the plurality of communication devices in the communication system include a first device 01 and a second device 02. FIG. 1 shows an example in which the communication system includes two communication devices. It may be understood that a quantity of communication devices in the communication system may alternatively be greater than 2. In this embodiment of this application, the first device and the second device are used as an example for description. For a communication process between other devices, refer to a communication process between the first device and the second device. Details are not described in embodiments of this application again.

Still refer to FIG. 1. The first device 01 can encode first service data to be transmitted to the second device 02 to obtain a first service bitstream, and send the first service bitstream to the second device 02 over a first link. The second device 02 can decode the received first service bitstream to reconstruct the first service data. In addition, the second device 02 can also encode second service data to be transmitted to the first device 01 to obtain a second service bitstream, and send the second service bitstream to the first device 01 over a second link. The first device 01 can also decode the received second service bitstream to reconstruct the second service data.

However, in a process in which the service bitstream is transmitted on the link, the link may be interfered by an external factor. Consequently, a bit error occurs in the service bitstream transmitted on the link. For example, it is assumed that an a^{th} bit (a≥1) in the first service bitstream sent by the first device is a bit "0", but the a^{th} bit in the first service bitstream received by the second device changes from the bit "0" to a bit "1". It can be learned that a bit error occurs in the a^{th} bit in a process of transmitting the a^{th} bit on the first link.

In a related technology, a communication device that sends service data may encode the service data in an error correction encoding mode, and a communication device that receives the service data may decode the service data in an error correction decoding mode, to reduce a bit error ratio of a service bitstream. Currently, the error correction encoding mode includes a forward error correction (FEC) encoding mode, and the error correction decoding mode includes an FEC decoding mode. When encoding the service data in an FEC mode, the communication device adds parity bits after information bits used to carry the service data, to obtain the service bitstream. When decoding the service bitstream in an FEC mode, the communication device performs error correction on the information bits in the service bitstream by using these parity bits, to reduce the bit error ratio of the service bitstream. Encoding the service data by the communication device in an error correction mode may be referred to as encoding the service data by the communication device in the error correction encoding mode (for example, the FEC error correction encoding mode), and decoding the service data by the communication device in the error correction mode may be referred to as decoding the service data by the communication device in the error correction decoding mode (for example, the FEC error correction decoding mode).

For example, when a transmission rate is 64 giga-transactions per second (GT/s) or higher, a bit error ratio of a service bitstream before error correction (also referred to as a bit error ratio in (BERin)) is in a magnitude of e⁻⁴ to e⁻⁶, where e represents a natural constant. A bit error ratio of the service bitstream after error correction (also referred to as a bit error ratio out (BERout)) is in a magnitude of e⁻¹². It can be learned that the bit error ratio of the service bitstream is greatly reduced after error correction. The error correction encoding mode and the error correction decoding mode can provide gains for the service bitstream, thereby reducing the bit error ratio of the service bitstream.

However, currently, application solutions of the FEC mode (the FEC error correction encoding mode and the FEC error correction decoding mode) have many problems.

For example, in an application solution of the FEC mode, in the peripheral component interconnect express (PCIe) 6.0, it is specified that a fixed FEC mode is used when a transmission rate is 64 giga-transactions per second (GT/s) or higher. However, an error correction capability of the FEC mode is fixed and cannot be adjusted, and consequently flexibility is poor.

For example, in the service bitstream transmission process, when the transmission rate is fixed, interference (for example, a temperature and a voltage) on the link may change. This may cause a change in link performance, and a currently used FEC mode may not match a parameter of the current link. As a result, an increased bit error ratio due to insufficient error correction performance of the FEC mode or increased power consumption and delay due to excessive error correction performance of the FEC mode may occur.

For another example, in another application solution of the FEC mode, there are two FEC modes: an interleaved FEC mode and a non-interleaved FEC mode. Before transmitting a service bitstream, a communication device enters a training state, to negotiate and select the interleaved FEC mode or the non-interleaved FEC mode in the training state. Then, the communication device exits the training state, and encodes and decodes the service bitstream in the negotiated FEC mode. However, after communication devices negotiate the FEC mode, the FEC mode cannot be changed, and consequently flexibility is poor. In addition, when the communication device enters the training state, the service bitstream cannot be transmitted, causing a large impact on a service.

An embodiment of this application provides a communication method, to resolve the foregoing problems in the related technology. For example, as shown in FIG. 2, the method may include the following operations.

S101: A second device sends a test bitstream to a first device.

When a link from the second device to the first device is in a training state or a service bitstream transmission state, the second device may send one or more test bitstreams to the first device. An occasion on which the second device sends the test bitstream to the first device is not limited in embodiments of this application.

It may be understood that the link from the second device to the first device first enters the training state, and then enters the service bitstream transmission state (also referred to as an active state). The first device and the second device may set a link width, a rate, and the like when the link from the second device to the first device is in the training state. The first device and the second device may further negotiate, in the training state, to enter the service bitstream transmission state. In this negotiation process, the first device and the second device may exchange bitstreams used for negotiating to enter the service bitstream transmission state. When the link from the second device to the first device is in the service bitstream transmission state, the second device may encode to-be-transmitted service data, and send a service bitstream obtained through encoding to the first device over the link.

The test bitstream sent in S101 is different from the service bitstream. The test bitstream is used by the first device to obtain a parameter of the link from the second device to the first device in a subsequent operation, and then initiate setting (or switching) of an error correction encoding mode based on the parameter of the link.

In S101, if the second device sends the test bitstream to the first device when the link from the second device to the first device is in the service bitstream transmission state, the test bitstream is inserted into the service bitstream sent by the second device to the first device. It may be understood that the test bitstream is inserted into a specific location of the service bitstream sent by the second device to the first device. The first device may receive the test bitstream from the location in a process of receiving the service bitstream. The test bitstream may be inserted at a start location, a middle location, or an end location of the service bitstream. A location at which the test bitstream is inserted in the service bitstream is not limited in embodiments of this application.

S102: The first device determines the parameter of the link from the second device to the first device based on the test bitstream.

After receiving the test bitstream, the first device may determine the parameter of the link from the second device to the first device based on the test bitstream. When the first device receives a plurality of test bitstreams, the first device may determine the parameter of the link from the second device to the first device based on the plurality of test bitstreams.

The parameter of the link from the second device to the first device may be a bit error ratio (BER) of the link. The first device may compare the test bitstream received in S101 with a test bitstream that should be theoretically received, to determine a BER of the test bitstream, and use the BER as the BER of the link from the second device to the first device. Optionally, the parameter of the link from the second device to the first device may alternatively not be the BER of the link. For example, the parameter may alternatively be the BER of the link to the power of - 1, or a frame error rate of the test bitstream received by the second device after error correction decoding.

S103: The first device determines a second error correction encoding mode based on the parameter of the link from the second device to the first device.

After obtaining the parameter of the link from the second device to the first device, the first device may select the second error correction encoding mode from a plurality of error correction encoding modes based on the parameter. The error correction encoding mode in this embodiment of this application may be an encoding mode that has an error correction function, for example, an FEC encoding mode, a pre-encoding mode, a hybrid error correction encoding mode, or an automatic repeat request encoding mode.

For example, the first device may be configured with a plurality of parameter ranges, and may be configured with a correspondence between a parameter range and an error correction encoding mode. A plurality of encoding modes may one-to-one correspond to the plurality of parameter ranges. The second device may determine, in the plurality of parameter ranges, a parameter range in which the parameter of the link from the second device to the first device is located, and may further use an error correction encoding mode corresponding to the parameter range as the second error correction encoding mode.

For the plurality of error correction encoding modes that one-to-one correspond to the plurality of parameter ranges, each error correction encoding mode may match a parameter in a corresponding parameter range, and the error correction encoding mode may be applicable to encoding a service bitstream transmitted on a link having the parameter. For example, the parameter of the link from the second device to the first device is the BER, and the plurality of error correction encoding modes include error correction encoding modes with different error correction capabilities. In the plurality of error correction encoding modes that one-to-one correspond to the plurality of parameter ranges, a stronger error correction capability of an error correction encoding mode indicates a higher BER in a parameter range corresponding to the error correction encoding mode, and a weaker error correction capability of an error correction encoding mode indicates a lower BER in a parameter range corresponding to the error correction encoding mode. It can be learned that the error correction capability of the error correction encoding mode is positively correlated with a value of the BER in the corresponding parameter range. In addition, when the parameter of the link from the second device to the first device is the BER⁻¹, the error correction capability of the error correction encoding mode is negatively correlated with a value of BER-1 in the corresponding parameter range.

S104: When a link from the first device to the second device is in the service bitstream transmission state, the first device sends a second control bitstream to the second device, where the second control bitstream includes the second error correction encoding mode.

After determining the second error correction encoding mode, the first device may send the second control bitstream that includes the second error correction encoding mode to the second device when the link from the first device to the second device is in the service bitstream transmission state. In this case, the second control bitstream is inserted into a service bitstream sent by the first device to the second device.

The link from the first device to the second device also first enters the training state, and then enters the service bitstream transmission state. When the link from the first device to the second device is in the service bitstream transmission state, the first device may encode to-be-transmitted service data, and send a service bitstream obtained through encoding to the second device over the link. A control bitstream (for example, the second control bitstream) sent by the first device to the second device is different from the service bitstream sent by the first device to the second device, and the control bitstream is related to controlling the second device to set (or switch) an error correction encoding mode.

Optionally, after determining the second error correction encoding mode, the first device may further determine whether the second error correction encoding mode is the same as an error correction encoding mode corresponding to an error correction decoding mode used by the first device. If the second error correction encoding mode is different from the error correction encoding mode corresponding to the error correction decoding mode used by the first device, the first device sends the second control bitstream that includes the second error correction encoding mode to the second device when the link from the first device to the second device is in the service bitstream transmission state.

For example, if the second error correction encoding mode is different from the error correction encoding mode corresponding to the error correction decoding mode used by the first device, it indicates that an error correction encoding mode used by the second device does not match the parameter of the link from the second device to the first device. In this case, the first device may send the second control bitstream that includes the second error correction encoding mode to the second device, to trigger subsequent switching of the error correction encoding mode used by the second device.

However, if the second error correction encoding mode is the same as the error correction encoding mode corresponding to the error correction decoding mode used by the first device, it indicates that the error correction encoding mode used by the second device matches the parameter of the link from the second device to the first device. In this case, the first device may not send the second control bitstream that includes the second error correction encoding mode to the second device, so that subsequent switching of the error correction encoding mode used by the second device is not triggered.

S105: The second device sends a third control bitstream to the first device, where the third control bitstream includes a third error correction encoding mode.

It may be understood that the link from the first device to the second device is independent of the link from the second device to the first device. When the link from the first device to the second device is in the service bitstream transmission state, the link from the second device to the first device may be in the training state or the service bitstream transmission state. Therefore, although the first device sends the second control bitstream to the second device when the link from the first device to the second device is in the service bitstream transmission state in S104, the second device may send the third control bitstream to the first device when the link from the second device to the first device is in the training state or the service bitstream transmission state in S105.

In this embodiment of this application, an example in which the link from the first device to the second device simultaneously enters the service bitstream transmission state is used. Therefore, the first device may send the second control bitstream to the second device when the link from the first device to the second device is in the service bitstream transmission state in S104, and the second device may send the third control bitstream to the first device when the link from the second device to the first device is in the service bitstream transmission state in S 105. In this case, the third control bitstream is inserted into the service bitstream sent by the second device to the first device.

After receiving the second control bitstream sent by the first device, the second device may compare the second error correction encoding mode included in the second control bitstream with the error correction encoding mode used by the second device, and select one error correction encoding mode from the second error correction encoding mode and the error correction encoding mode used by the second device as the third error correction encoding mode.

Optionally, the third error correction encoding mode is an error correction encoding mode with a stronger error correction capability in the second error correction encoding mode and the error correction encoding mode used by the second device. The second device may select, based on error correction capabilities of the error correction encoding modes, the third error correction encoding mode from the second error correction encoding mode and the error correction encoding mode used by the second device.

The third error correction encoding mode may alternatively not be the error correction encoding mode with the stronger error correction capability in the second error correction encoding mode and the error correction encoding mode used by the second device. For example, the third error correction encoding mode is an error correction encoding mode with a weaker error correction capability in the second error correction encoding mode and the error correction encoding mode used by the second device. For another example, the third error correction encoding mode is an error correction encoding mode selected by a user of the second device from the second error correction encoding mode and the error correction encoding mode used by the second device. A manner in which the second device selects the third error correction encoding mode from the second error correction encoding mode and the error correction encoding mode used by the second device is not limited in embodiments of this application.

S106: When the link from the first device to the second device is in the service bitstream transmission state, the first device sends a first control bitstream to the second device, where the first control bitstream includes a first error correction encoding mode, and the first error correction encoding mode is a mode selected by the first device from the second error correction encoding mode and the third error correction encoding mode.

After receiving the third control bitstream sent by the second device, the first device may finally select, as the first error correction encoding mode, one of the third error correction encoding mode selected by the second device and the second error correction encoding mode selected by the first device, and send the first control bitstream that includes the first error correction encoding mode to the second device.

Optionally, the first error correction encoding mode is an error correction encoding mode with a stronger error correction capability in the second error correction encoding mode and the third error correction encoding mode. For a manner in which the first device selects the first error correction encoding mode from the second error correction encoding mode and the third error correction encoding mode, refer to any one of the manners in which the second device selects the third error correction encoding mode from the second error correction encoding mode and the error correction encoding mode used by the second device in S105. Details are not described in embodiments of this application again.

S107: The second device sends, to the first device, a service bitstream encoded in the first error correction encoding mode.

After receiving the first control bitstream, the second device may set, based on the first error correction encoding mode included in the first control bitstream, the error correction encoding mode used by the second device to the first error correction encoding mode. Then, the second device may send, to the first device, the service bitstream encoded in the first error correction encoding mode.

It may be understood that before S107, the error correction encoding mode used by the second device may be the first error correction encoding mode, or may not be the first error correction encoding mode. If the error correction encoding mode used by the second device is the first error correction encoding mode before S107, the second device does not need to switch the used error correction encoding mode in S107. If the error correction encoding mode used by the second device is not the first error correction encoding mode before S107, the second device needs to switch the used error correction encoding mode to the first error correction encoding mode in S107.

S108: The first device decodes, in a decoding mode corresponding to the first error correction encoding mode, the service bitstream sent by the second device.

After setting the error correction encoding mode used by the second device to the first error correction encoding mode, the second device may send a fourth control bitstream to the first device, where the fourth control bitstream indicates that the second device has encoded the service bitstream in the first error correction encoding mode. Then, the first device may decode, based on the fourth control bitstream in the decoding mode corresponding to the first error correction encoding mode, the service bitstream sent by the second device. For example, the first device may set, based on the fourth control bitstream, the error correction decoding mode used by the first device to the decoding mode corresponding to the first error correction encoding mode, and then may decode, in the decoding mode corresponding to the first error correction encoding mode, the service bitstream sent by the second device. In this way, after the second device sets the error correction encoding mode to the first error correction encoding mode, the first device sets the error correction decoding mode to a first error correction decoding mode, so that the first device can decode the service bitstream that is sent by the second device and that is encoded in the first error correction encoding mode.

It may be understood that, in S108, the first device may alternatively decode, based on the fourth control bitstream in the decoding mode corresponding to the first error correction encoding mode, the service bitstream sent by the second device. For example, after determining the first error correction encoding mode, the first device may directly set the error correction encoding mode used by the first device to the first error correction encoding mode, and then may decode, in the decoding mode corresponding to the first error correction encoding mode, the service bitstream sent by the second device. In this case, the second device does not need to send the fourth control bitstream to the first device. Certainly, in this case, the second device may alternatively send the fourth control bitstream to the first device. This is not limited in embodiments of this application.

In addition, in S108, the first device may not set the used decoding mode to the decoding mode corresponding to the first error correction encoding mode. In this case, after the first device receives the service bitstream that is sent by the second device and that is encoded in the first error correction encoding mode, the first device may alternatively not use the decoding mode corresponding to the first error correction encoding mode to decode the service bitstream sent by the second device.

It can be learned from the foregoing content that when the link from the first device to the second device is in the service bitstream transmission state, the first device may send the first control bitstream to the second device, to indicate the second device to encode the service bitstream in the first error correction encoding mode. This implements setting of the first error correction encoding mode. In this way, the first device does not need to suspend transmission of the service bitstream to enter the training state. This can avoid a problem that the first device cannot transmit the service bitstream to the second device when the first device enters the training state, and reduce impact of setting the error correction encoding mode on a service from the first device to the second device.

Similarly, the second device may also send the test bitstream and the third control bitstream to the first device when the link from the second device to the first device is in the service bitstream transmission state. It can be learned that the second device does not need to suspend transmission of the service bitstream to enter the training state. This can avoid a problem that the second device cannot transmit the service bitstream to the first device when the second device enters the training state, and reduce impact of setting the error correction encoding mode on a service from the second device to the first device.

In addition, the first error correction encoding mode is an error correction encoding mode selected from the plurality of error correction encoding modes based on the parameter of the link from the second device to the first device, and the first error correction encoding mode is an error correction encoding mode that better adapts to the link from the second device to the first device in the plurality of error correction encoding modes. Therefore, the first error correction encoding mode matches the link from the second device to the first device well. In this way, a problem of a high bit error ratio or large power consumption delay caused by low matching between the error correction encoding mode used by the second device and the link from the second device to the first device can be avoided.

In addition, the second device supports a plurality of error correction encoding modes, and the second device may set, based on the parameter of the link from the second device to the first device, the first error correction encoding mode used by the second device, so that an encoding technology is more flexibly applied. When the link from the second device to the first device is in the service bitstream transmission state, and when the first error correction encoding mode is different from the error correction encoding mode used by the second device, the error correction encoding mode used by the second device can be flexibly switched, to switch the error correction encoding mode used by the second device to the first error correction encoding mode. This helps improve transmission effect of the service bitstream sent by the second device to the first device.

In addition, it can be learned from S104, S105, and S106 that after determining the second error correction encoding mode, the first device further needs to negotiate with the second device, to negotiate and determine the first error correction encoding mode. In this negotiation process, it is assumed that the third error correction encoding mode is the error correction encoding mode with the stronger error correction capability in the second error correction encoding mode and the error correction encoding mode used by the second device, and the first error correction encoding mode is the error correction encoding mode with the stronger error correction capability in the second error correction encoding mode and the third error correction encoding mode. If an error correction capability of the error correction encoding mode used by the second device is stronger than an error correction capability of the second error correction encoding mode, the first error correction encoding mode can be the third error correction encoding mode (the error correction encoding mode used by the second device) through negotiation. In addition, because an error correction encoding mode originally used by the second device is the first error correction encoding mode, the second device does not need to switch the used error correction encoding mode after receiving the first control bitstream. In this way, the second device can send, to the first device, the service bitstream encoded in the first error correction encoding mode more efficiently.

Further, in the foregoing content, the first device determines the second error correction encoding mode based on the parameter of the link from the second device to the first device, negotiates the first error correction encoding mode with the second device, and finally indicates the second device to set the error correction encoding mode used by the second device to the first error correction encoding mode, and indicates the first device to set the error correction decoding mode used by the first device to the decoding mode corresponding to the first error correction encoding mode. It can be learned that in the foregoing content, the first device serves as a leading party to perform operations of determining, initiation of negotiation, and decision of negotiation of the second error correction encoding mode, and controlling setting of the first error correction encoding mode.

It may be understood that the foregoing leading party may alternatively not be the first device, but the second device. In this case, the first device may send the obtained parameter of the link from the second device to the first device to the second device, or the second device receives the parameter that is of the link from the second device to the first device and that is entered by the user. Then, the second device performs, based on the parameter, the operations of determining, initiation of negotiation, and decision of negotiation of the second error correction encoding mode, and controlling setting of the first error correction encoding mode. It is found through comparison that when the first device is the leading party, the first device does not need to transmit the parameter of the link from the second device to the first device to the second device. This can reduce device interaction and improve efficiency of setting the error correction encoding mode.

For example, when the leading party is the second device, the second device obtains the parameter of the link from the second device to the first device before S103. For example, before S103, the second device receives a ninth control bitstream that is sent by the first device and that includes the parameter of the link from the second device to the first device. In S103, the second device determines the second error correction encoding mode based on the parameter of the link from the second device to the first device. S103: When the link from the second device to the first device is in the service bitstream transmission state, the second device may send the second control bitstream that includes the second error correction encoding mode to the first device. In S105, the first device may send the third control bitstream that includes the third error correction encoding mode to the second device. In this case, the third error correction encoding mode is a mode selected by the first device from the encoding mode corresponding to the error correction decoding mode used by the first device and the second error correction encoding mode. In S106, when the link from the second device to the first device is in the service bitstream transmission state, the second device may send the first control bitstream that includes the first error correction encoding mode to the first device. The first error correction encoding mode is a mode selected by the second device from the second error correction encoding mode and the third error correction encoding mode. In this case, the first control bitstream indicates the first device to set the used error correction decoding mode to the decoding mode corresponding to the first error correction encoding mode. In S107, the second device may send, to the first device, the service bitstream encoded in the first error correction encoding mode. In S108, the first device decodes, in the decoding mode corresponding to the first error correction encoding mode, the service bitstream sent by the second device. Optionally, after setting the used error correction decoding mode to the decoding mode corresponding to the first error correction encoding mode, the first device may further send the fourth control bitstream to the second device, where the fourth control bitstream indicates that the first device has used the error correction decoding mode corresponding to the first error correction encoding mode. Then, the second device may send, based on the fourth control bitstream, the service bitstream encoded in the first error correction encoding mode to the first device.

It may be understood that after determining the second error correction encoding mode, the first device or the second device may not need to perform S104 and S105 for negotiation, but directly use the second error correction encoding mode as the first error correction encoding mode, and perform S106.

In addition, in this embodiment of this application, after determining the first error correction encoding mode, the leading party sends the first control bitstream that includes the first error correction encoding mode to a non-leading party in S106, so that the non-leading party sets an error correction encoding mode to the first error correction encoding mode (or sets an error correction decoding mode to the decoding mode corresponding to the first error correction encoding mode). It may be understood that, when the first device and the second device do not need to negotiate with each other, the non-leading party may also determine the second error correction encoding mode in a same manner as the leading party, and use the second error correction encoding mode as the first error correction encoding mode. It can be learned that, without negotiation, both the first device and the second device can obtain the parameter of the link from the second device to the first device, determine the same second error correction encoding mode as the first error correction encoding mode based on the parameter, and set the error correction encoding mode to the first error correction encoding mode (or set the error correction decoding mode to the decoding mode corresponding to the first error correction encoding mode). In this case, the parameter of the link from the second device to the first device on which the second device is based may be provided by the first device, or may be entered by the user into the second device.

In the foregoing embodiment, an example in which the parameter of the link from the second device to the first device is determined based on the test bitstream is used. Optionally, the first device or the second device may alternatively determine the parameter of the link from the second device to the first device in another manner. For example, the first device determines the parameter of the link from the second device to the first device based on the service bitstream sent by the second device (for example, uses a bit error ratio in of the service bitstream as the bit error ratio of the link from the second device to the first device). In this case, the second device does not need to send the test bitstream to the first device. For another example, the first device or the second device receives the parameter that is of the link from the second device to the first device and that is entered by the user. In this case, the second device does not need to send the test bitstream to the first device, either.

Optionally, the test bitstream is any one of a plurality of bitstreams. Before sending the test bitstream to the first device, the second device may further send a fifth control bitstream that includes an identifier of the test bitstream to the first device. Then, the first device may receive, based on the identifier of the test bitstream, the test bitstream sent by the second device.

Optionally, the test bitstream may be flexibly switched among the plurality of bitstreams. In this case, before sending the test bitstream to the first device, the second device further sends the fifth control bitstream that includes the identifier of the test bitstream to the first device. Therefore, the first device can accurately receive the test bitstream based on the identifier of the test bitstream.

Herein, an example in which any bitstream in the plurality of bitstreams is selected as the test bitstream is used. It may be understood that the test bitstream may alternatively be fixed. In this case, the test bitstream may be preconfigured in both the first device and the second device, and the second device does not need to send the fifth control bitstream that includes the identifier of the test bitstream to the first device.

Optionally, a location of the test bitstream (for example, a location in which the test bitstream appears periodically) may be fixed. Alternatively, the location of the test bitstream may be variable. In this case, before S101, the second device may further send, to the first device, a seventh control bitstream that includes the location of the test bitstream. The first device may receive the test bitstream at the location of the test bitstream. In addition, when the location of the test bitstream is variable, the second device may alternatively not send the seventh control bitstream to the first device. In this case, the test bitstream is located at a location of a fixed length after the fifth control bitstream that includes the identifier of the test bitstream. For example, the test bitstream closely follows the fifth control bitstream.

A control bitstream (for example, the first control bitstream or the third control bitstream) sent by the first device to the second device is inserted into the service bitstream sent by the first device to the second device. The first device may send the service bitstream to the second device in a service bitstream sending periodicity, and the first device may further send the control bitstream to the second device in a non-service bitstream sending periodicity (the non-service bitstream sending periodicity is also a control bitstream sending periodicity).

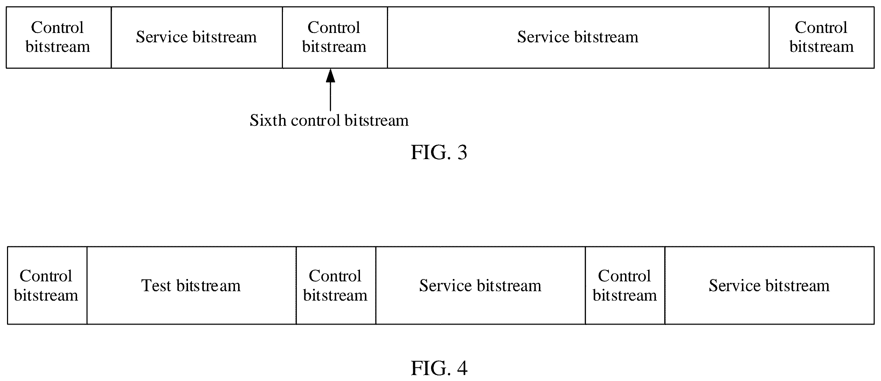

Optionally, before the first device sends any control bitstream (for example, the first control bitstream) to the second device, when the link from the first device to the second device is in the service bitstream transmission state, the first device may further send a sixth control bitstream to the second device, where the sixth control bitstream includes the periodicity in which the first device sends the service bitstream to the second device (or a periodicity in which the first device sends the control bitstream to the second device). The periodicity in which the first device sends the service bitstream to the second device (or the periodicity in which the first device sends the control bitstream to the second device) is one of a plurality of periodicities. Then, the second device may receive, based on the periodicity included in the sixth control bitstream, the service bitstream and the control bitstream that are sent by the first device. In this way, the periodicity in which the first device sends the service bitstream to the second device (or the periodicity in which the first device sends the control bitstream to the second device) can be flexibly switched among the plurality of periodicities. For example, as shown in FIG. 3, it is assumed that before and after the first device sends the sixth control bitstream that includes the control bitstream sent by the first device to the second device, both the periodicity in which the first device sends the service bitstream to the second device and the periodicity in which the first device sends the control bitstream to the second device change. It may be understood that the periodicity in which the first device sends the service bitstream to the second device (or the periodicity in which the first device sends the control bitstream to the second device) may alternatively be fixed, and the first device may alternatively not periodically send the service bitstream to the second device. This is not limited in embodiments of this application.

Similarly, when a control bitstream (for example, the second control bitstream) sent by the second device to the first device is inserted into the service bitstream sent by the second device to the first device, the second device may send the service bitstream to the first device in a service bitstream sending periodicity, and the second device may further send the control bitstream to the first device in a non-service bitstream sending periodicity (the non-service bitstream sending periodicity is a control bitstream sending periodicity). For example, as shown in FIG. 4, control bitstreams are periodically interleaved in the service bitstream sent by the second device to the first device. The test bitstream may be interleaved between two adjacent control bitstreams. The service bitstream may be interleaved between the two control bitstreams, or the service bitstream may not be interleaved between the two control bitstreams. In FIG. 4, an example in which the service bitstream is not interleaved between the two control bitstreams is used.

Optionally, before the second device sends any control bitstream to the first device, when the link from the second device to the first device is in the service bitstream transmission state, the second device may further send an eighth control bitstream to the first device, where the eighth control bitstream includes the periodicity in which the second device sends the service bitstream to the first device (or a periodicity in which the second device sends the control bitstream to the first device). The periodicity in which the second device sends the service bitstream to the first device is one of the plurality of periodicities. Then, the first device may receive, based on the periodicity included in the eighth control bitstream, the service bitstream and the control bitstream that are sent by the second device. In this way, the periodicity in which the second device sends the service bitstream to the first device (or the periodicity in which the second device sends the control bitstream to the first device) can be flexibly switched among the plurality of periodicities. It may be understood that the periodicity in which the second device sends the service bitstream to the first device (or the periodicity in which the second device sends the control bitstream to the first device) may alternatively be fixed, and the second device may alternatively not periodically send the service bitstream to the first device. This is not limited in embodiments of this application.

Further, for at least one of various control bitstreams (for example, the first control bitstream and the second control bitstream) in embodiments of this application, a codeword of the control bitstream may meet at least one of the following condition 1 to condition 3.

Condition 1: The codeword is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

Condition 2: Quantities of 0 bits and 1 bits in the codeword are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Condition 3: The codeword supports multi-level pulse amplitude modulation or non-return-to-zero line coding (NRZ) modulation, so that the control bitstream can be applicable to a device that uses multi-level pulse amplitude modulation or NRZ modulation. Multi-level pulse amplitude modulation may be 4-level pulse amplitude modulation (PAM4), 6-level pulse amplitude modulation (PAM6), 8-level pulse amplitude modulation (PAM8), or the like. It may be understood that the codeword may alternatively not support multi-level pulse amplitude modulation or NRZ modulation. This is not limited in embodiments of this application.

For example, the codeword that meets the condition 1 may be a Bose-Chaudhuri-Hocquenghem (BCH) code, and the codeword may alternatively not be a BCH. For example, the codeword is a Hamming code or another type of codeword.

In addition, a Hamming distance of the codeword that meets the condition 1 may be 8. The Hamming distance may alternatively not be 8, for example, 5, 6, 7, 9, or 10.

Optionally, the codeword that meets the condition 1 includes 16 bits, five least significant bits in the 16 bits are information bits, and a 6^{th} least significant bit to a 15^{th} least significant bit in the 16 bits are obtained by encoding the five least significant bits in the 16 bits based on a generator polynomial; and one most significant bit in the 16 bits is obtained by performing even parity check on the 15 least significant bits in the 16 bits; and the generator polynomial is *g*(*x*) *= x*¹⁰ *+x⁸* + *x*⁵ *+x*⁴ *+x*² *+x+*1*,* where x represents a variable in the generator polynomial. It may be understood that a quantity of bits in the codeword may alternatively not be 16, a quantity of information bits in the codeword may alternatively not be 5, and a quantity of parity bits (for example, the 6^{th} bit to a 16^{th} bit in the least significant bits of the 16 bits) may alternatively not be 11. The codeword that meets the condition 1 may be different from the codeword including the 16 bits. This is not limited in embodiments of this application. Such a codeword may be obtained through encoding by using an extended BCH (eBCH) encoding scheme. eBCH-16 (indicating an eBCH codeword of 16 bits) is formed by a BCH (15, 5) (indicating a BCH codeword of 15 bits, where the first five bits are information bits) and one-bit even parity bit.

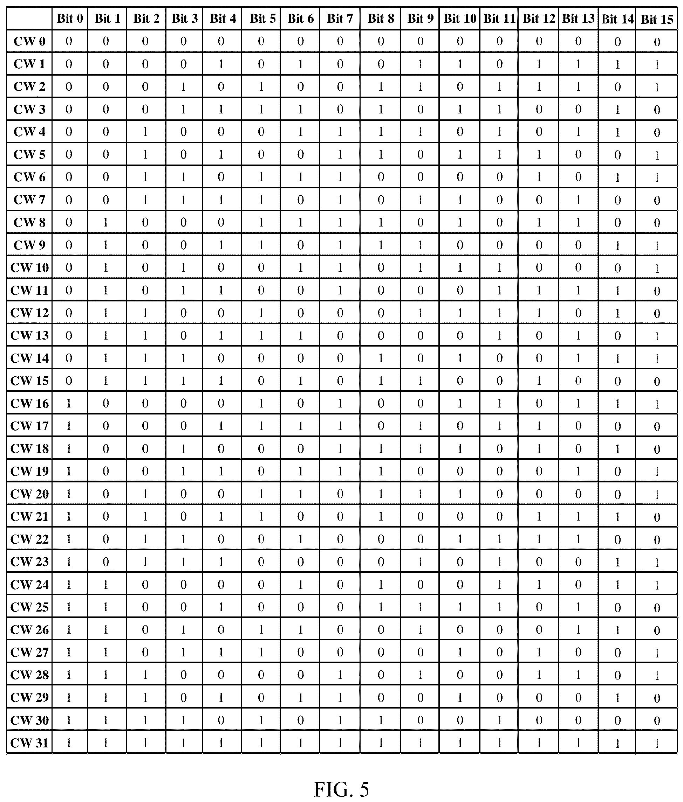

For example, as shown in FIG. 5, there may be 32 codewords that meet the condition 1, and the 32 codewords are a codeword CW 0 to a codeword CW 31 in FIG. 5, respectively. In FIG. 5, 16 bits of each codeword are respectively a bit 0 to a bit 15 in FIG. 5. The bit 0 is a 1^{st} bit (a least significant bit) of the 16 bits, and the bit 15 is a 16^{th} bit (a most significant bit) of the 16 bits. For the at least one control bitstream in embodiments of this application, the control bitstream may use at least one of the 32 codewords shown in FIG. 5.

Eight codewords that meet the conditions 2 and 3 in the 32 codewords shown in FIG. 5 may be shown in Table 1, and are the codeword CW 8, the codeword CW 28, the codeword CW 3, the codeword CW 23, the codeword CW 9, the codeword CW 21, the codeword CW 10, and the codeword CW 22 in FIG. 5, respectively. The leftmost bit in each of these codewords is the least significant bit (the bit 0) in FIG. 5, and the rightmost bit is the most significant bit (the bit 15) in FIG. 5. The leftmost bit in a codeword on which NRZ modulation is performed and a codeword on which PAM4 is performed is the least significant bit, and the rightmost bit is the most significant bit.

**Table 1**

| Codeword | Codeword on which NRZ modulation is performed | Codeword on which PAM4 is performed |
|---|---|---|
| CW 8: 0100011110101100 | 0010011111011000 | 03122130 |
| CW 28: 1110000101001101 | 0001101100011011 | 01320132 |
| CW 3: 0001111010110010 | 1110010011100100 | 23102310 |
| CW 23: 1011100001010011 | 1101100000100111 | 21300312 |
| CW 9: 0100110111000011 | 0110001110000111 | 13023012 |
| CW 21: 1010110010001110 | 0111100010011100 | 12303120 |
| CW 10: 0101001101110001 | 1000011101100011 | 30121302 |
| CW 22: 1011001000111100 | 1001110001111000 | 31201230 |

Further, for at least one of the various control bitstreams (for example, the first control bitstream and the second control bitstream) in embodiments of this application, the control bitstream may have the following function 1 and function 2.

The function 1 is delimitation, to be specific, a start location and an end location of the control bitstream are found from a service bitstream into which the control bitstream is inserted, and a boundary of the control bitstream is determined and locked.

The function 2 is having a part capable of including information (for example, the first error correction encoding mode or the second error correction encoding mode) that needs to be included in the control bitstream.

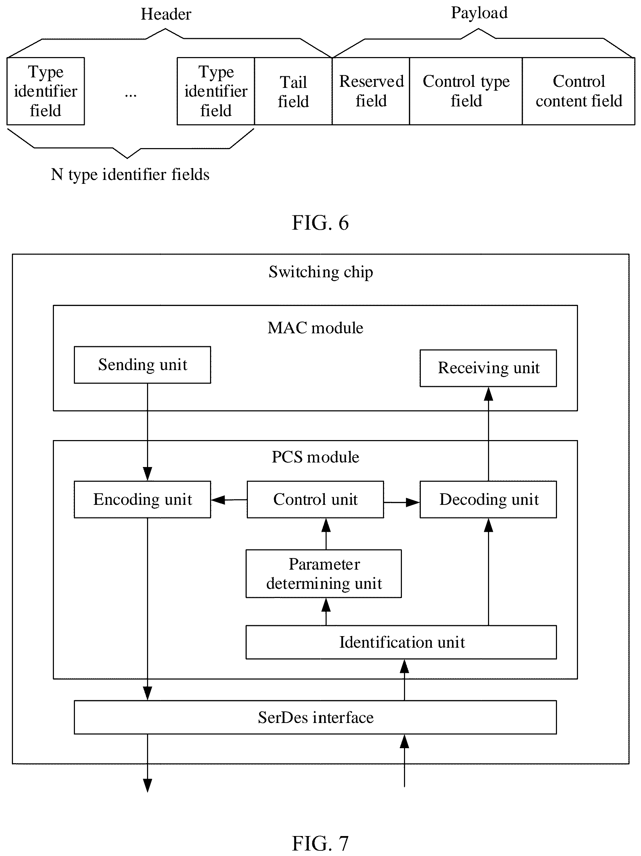

In an optional implementation, as shown in FIG. 6, for at least one of the various control bitstreams in embodiments of this application, the control bitstream may include a header and a payload that are sequentially transmitted. The header is used to implement the function 1, to be specific, locate the start location and the end location of the control bitstream. The payload is used to implement the function 2, to be specific, include the information that needs to be included in the control bitstream. Optionally, the control bitstream may alternatively include the header but does not include the payload, and the header is used to implement both the function 1 and the function 2.

For example, still refer to FIG. 6. The header of the control bitstream may include at least one type identifier field (the field is also referred to as a field segment) and a tail field. In FIG. 6, an example in which the at least one type identifier field includes N type identifier fields is used, where N is an integer greater than or equal to 1. For example, 1≤N+1≤5. When a quantity of type identifier fields is greater than 1, content of different type identifier fields is the same, so that the type identifier fields in the control bitstream are repeatedly transmitted. This can avoid a problem that if only one type identifier field is transmitted, the device fails to identify the type identifier field. The type identifier field is used to identify that a bitstream type is the control bitstream (a 1^{st} type identifier field indicates the start location of the control bitstream), and the tail field indicates the end location of the control bitstream. The header of the control bitstream may alternatively not include the tail field. In this case, the end location of the control bitstream is after a fixed length after the 1^{st} type identifier field.

Still refer to FIG. 6. The payload of the control bitstream may include a control type field and a control content field. In FIG. 6, an example in which the control type field and the control content field are sequentially transmitted is used. It may be understood that the control content field and the control type field may alternatively be sequentially transmitted. The control type field includes a type of content included in the control content field, and the control content field includes content that needs to be included in the control bitstream (for example, the first error correction encoding mode).

When receiving the type identifier field, the device (the first device or the second device) may determine, based on the type identifier field, that a currently received bitstream is a control bitstream. Then, the device may detect whether a tail field is received. When the tail field is received, the device may determine, based on the tail field, that a location of a first length preceding the tail field is a start location of the control bitstream, and a location of a second length following the tail field is an end location of the control bitstream. The first length is a length of the at least one type identifier field, and the second length is a length of a field that is in the control bitstream and that is located after the tail field. In addition, the device may further determine locations of the control type field and the control content field based on the tail field.

In addition, the control bitstream may alternatively include a field other than the at least one type identifier field, the tail field, the control type field, and the control content field. For example, as shown in FIG. 6, the control bitstream further includes a reserved field located between the tail field and the control type field.

Optionally, when the type included in the control type field changes, states of the control content field all belong to one state set. In this case, the state of the control content field may remain unchanged, or may change in the state set. In this way, the control content field can use a state in a small-scale state set, to indicate much content that needs to be included in the control content field.

For example, it is assumed that the control type field and the control content field each include two codewords. In this case, the control type field may have a plurality of states shown in Table 2, and the control content field may have a plurality of states shown in Table 3.

As shown in Table 2, the control type field has eight states: a state 1.1 to a state 1.8. The state 1.1 indicates that content included in the control bitstream is an error correction encoding mode, for example, the first error correction encoding mode, the second error correction encoding mode, or the third error correction encoding mode. The state 1.4 indicates that the content included in the control bitstream is a service bitstream periodicity (or a control bitstream periodicity). The state 1.5 indicates that the content included in the control bitstream is the identifier of the test bitstream. The state 1.8 indicates that the control bitstream does not include control-related content. In this case, the type included in the control type field is no control. In this case, the device that receives the control bitstream does not perform a corresponding operation based on the control bitstream. In addition, the states 1.2, 1.3, 1.6, and 1.7 are all reserved states.

**Table 2**

| State of the control type field | Control type field | | Type of the content included in the control bitstream |
|---|---|---|---|
| | Codeword of higher-order bits | Codeword of lower-order bits | |
| State 1.1 | CW 3 | CW 8 | Error correction encoding mode |
| State 1.2 | CW 8 | CW 9 | Reserved |
| State 1.3 | CW 9 | CW 10 | Reserved |
| State 1.4 | CW 10 | CW 21 | Service bitstream periodicity (or control bitstream periodicity) |
| State 1.5 | CW 21 | CW 22 | Identifier of the test bitstream |
| State 1.6 | CW 22 | CW 23 | Reserved |
| State 1.7 | CW 23 | CW 28 | Reserved |
| State 1.8 | CW 28 | CW 3 | No control |

As shown in Table 3, the control content field has eight states: a state 2.1 to a state 2.8. When the type included in the control type field is an error correction encoding mode, a service bitstream periodicity (or a control bitstream periodicity), and the identifier of the test bitstream, states of the control content field all belong to a state set including the state 2.1 to the state 2.8.

Refer to Table 3. When the type included in the control type field is the error correction encoding mode, the control content field includes any one of seven error correction encoding modes: an FEC mode 0, an FEC mode 1, an FEC mode 2, an FEC mode 3, an FEC mode 4, an FEC mode 5, a mode in which FEC is disabled, and a mode in which FEC is enabled. The mode in which FEC is enabled may be any one of the FEC mode 0, the FEC mode 1, the FEC mode 2, the FEC mode 3, the FEC mode 4, and the FEC mode 5. For example, the mode in which FEC is enabled may be a last used FEC mode in the FEC mode 0, the FEC mode 1, the FEC mode 2, the FEC mode 3, the FEC mode 4, and the FEC mode 5. When one of the first device and the second device does not enable the FEC mode, if the other device needs to send a specific FEC mode to the one device, a control content field in a control bitstream sent by the other device may use the state 2.8, or use any one of the state 2.1 to the state 2.6.

Still refer to Table 3. When the control type field includes a type of the service bitstream (or control bitstream) periodicity, the control content field includes an identifier of any one of eight periodicities: a periodicity 0 to a periodicity 7. When the control type field includes a type of the identifier of the test bitstream, the control content field includes an identifier of any one of eight bitstreams: a bitstream 0 to a bitstream 7. When the type included in the control type field is no control, content included in the control content field may also be no control (for example, the contentis empty). The device that receives the control bitstream does not perform a corresponding operation based on the control bitstream.

**Table 3**

| Type indicated by the control type field | State of the control content field | Control content field | | Content included in the control bitstream |
|---|---|---|---|---|
| | | Codeword of higher-order bits | Codeword of lower-order bits | |
| Error correction encoding mode | State 2.1 | CW 3 | CW 9 | FEC mode 0 |
| | State 2.2 | CW 8 | CW 10 | FEC mode 1 |
| | State 2.3 | CW 9 | CW 21 | FEC mode 2 |
| | State 2.4 | CW 10 | CW 22 | FEC mode 3 |
| | State 2.5 | CW 21 | CW 23 | FEC mode 4 |
| | State 2.6 | CW 22 | CW 28 | FEC mode 5 |
| | State 2.7 | CW 23 | CW 3 | Mode in which FEC is disabled |
| | State 2.8 | CW 28 | CW 8 | Mode in which FEC is enabled |
| Service bitstream (or control bitstream) periodicity | State 2.1 | CW 3 | CW 9 | Periodicity 0 |
| | State 2.2 | CW 8 | CW 10 | Periodicity 1 |
| | State 2.3 | CW 9 | CW 21 | Periodicity 2 |
| | State 2.4 | CW 10 | CW 22 | Periodicity 3 |
| | State 2.5 | CW 21 | CW 23 | Periodicity 4 |
| | State 2.6 | CW 22 | CW 28 | Periodicity 5 |
| | State 2.7 | CW 23 | CW 3 | Periodicity 6 |
| | State 2.8 | CW 28 | CW 8 | Periodicity 7 |
| Identifier of the test bitstream | State 2.1 | CW 3 | CW 9 | Identifier of the bitstream 0 |
| | State 2.2 | CW 8 | CW 10 | Identifier of the bitstream 1 |
| | State 2.3 | CW 9 | CW 21 | Identifier of the bitstream 2 |
| | State 2.4 | CW 10 | CW 22 | Identifier of the bitstream 3 |
| | State 2.5 | CW 21 | CW 23 | Identifier of the bitstream 4 |
| | State 2.6 | CW 22 | CW 28 | Identifier of the bitstream 5 |
| | State 2.7 | CW 23 | CW 3 | Identifier of the bitstream 6 |
| | State 2.8 | CW 28 | CW 8 | Identifier of the bitstream 7 |
| No control | State 2.1 | CW 3 | CW 9 | No control |

It may be understood that the codewords in the states in Table 2 and Table 3 may alternatively change. For example, one or more codewords are exchanged in some states in any one of Table 2 and Table 3. In addition, when the type included in the control type field changes, the state of the control content field may also change between different state sets. The payload may alternatively not include the control type field.

In addition, the type identifier field and the tail field each may also include two codewords. For example, when the control bitstream uses at least one codeword shown in Table 1, a codeword of higher-order bits in the type identifier field may be the codeword CW 21, and a codeword of lower-order bits in the type identifier field may be the codeword CW 28. A codeword of higher-order bits in the tail field may be the codeword CW 22, and a codeword of lower-order bits in the tail field may be the codeword CW 8.

In the foregoing embodiment, an example in which each field in the control bitstream includes two codewords is used. It may be understood that a quantity of codewords in a field in the control bitstream may alternatively be 1 or greater than 2, and quantities of codewords in different fields may alternatively be different. This is not limited in embodiments of this application.

For example, the type identifier field and the tail field each may include two codewords, but the control type field and the control content field each include four codewords. It is assumed that one codeword includes 16 bits, and one symbol includes 8 bits. In this case, a quantity of symbols of each field in the control bitstream may be shown in Table 4. It can be learned that the at least one type identifier field includes a 0^{th} symbol to a (4N-1)^{th} symbol, each type identifier field includes four symbols, and the at least one type identifier field includes N type identifier fields in total; the tail field includes a (4N)^{th} symbol to a (4N+3)^{th} symbol; the reserved field includes a (4*N+4)^{th} symbol to a (4N+11)^{th} symbol; the control type field includes a (4N+11)^{th} symbol to a (4N+19)^{th} symbol; and the control content field includes a (4N+20)^{th} symbol to a (4N+27)^{th} symbol, where N may be any value greater than or equal to 1. For example, N is 1, 2, 3, 4, or 5. Correspondingly, a total length 4*N+27+1 of the control bitstream may be 32, 36, 40, 44, or 48 symbols.

**Table 4**

| Field in a control bitstream | Symbol |
|---|---|
| At least one type identifier field | 0 to (4*N-1) |
| Tail field | 4*N to (4*N+3) |
| Reserved field | (4*N+4) to (4*N+11) |
| Control type field | (4*N+12) to (4*N+19) |
| Control content field | (4*N+20) to (4*N+27) |

In addition, at least one of the various control bitstreams (for example, the first control bitstream, the second control bitstream, and the third control bitstream) in embodiments of this application may be a unified alignment marker (UAM) bitstream, an alignment marker (AM) bitstream, an alignment marker skip (AMSKP) bitstream, or the like. When the control bitstream is an AMSKP bitstream, the reserved field in the control bitstream shown in FIG. 6 may be a lane identifier (Lane ID) field, and the lane ID field includes an identifier of a lane. It may be understood that the control bitstream provided in embodiments of this application may have a function other than the functions disclosed in this application. This is not limited in embodiments of this application.

In the foregoing embodiment, an example in which the error correction encoding scheme and the error correction decoding scheme are set once is used. It may be understood that the first device and the second device may further perform the method provided in embodiments of this application a plurality of times, to set the error correction encoding scheme and the error correction decoding scheme a plurality of times. This dynamically sets the error correction encoding scheme and the error correction decoding scheme.

It may be understood that in some cases, the devices at two ends of the link may be a transmitter and a receiver of each other. In other words, a device at one end may be a transmitter or a receiver, and a device at the other end may be a transmitter or a receiver. Therefore, the second device may also have a function of the first device, and the first device may also have a function of the second device. Details are not described in embodiments of this application again. It can be learned that the error correction encoding mode of the service bitstream on the link from the second device to the first device (the error correction encoding scheme used by the second device) and the error correction encoding mode of the service bitstream on the link from the first device to the second device (the error correction encoding scheme used by the first device) may be independently set. In addition, the error correction encoding scheme used by the second device may be the same as or different from the error correction encoding mode used by the first device.

In embodiments of this application, a switching chip in the first device and a switching chip in the second device may perform the method provided in embodiments of this application. The switching chip may be a central processing unit (CPU), a natural processing unit (NPU), or the like. A structure of a switching chip in each of the first device and the second device may be shown in FIG. 7. The switching chip includes an identification unit, a parameter determining unit, a control unit, a sending unit, a receiving unit, an encoding unit, and a decoding unit.

The sending unit is configured to send service data to the encoding unit.

The control unit is configured to control the encoding unit to obtain, based on the service data provided by the sending unit, a service bitstream into which control bitstreams are inserted, where the service bitstream is obtained by performing error correction encoding on the service data. Then, the encoding unit transmits the service bitstream into which the control bitstreams are inserted to another device. When a control bitstream that includes the identifier of the test bitstream exists in the control bitstreams, the test bitstream is further inserted into a location after the control bitstream is inserted into the service bitstream.

The identification unit is configured to identify the control bitstream and the service bitstream from the bitstreams received by the device.

The parameter determining unit is configured to: after the identification unit identifies the control bitstream that includes the identifier of the test bitstream, search for the test bitstream based on the identifier of the test bitstream, and determine, based on the test bitstream, a parameter of a link for transmitting the test bitstream.

The control unit is configured to: based on the control bitstream identified by the identification unit and/or the parameter determined by the parameter determining unit, set an error correction encoding mode used by the encoding unit to the first error correction encoding mode, and set an error correction decoding mode used by the decoding unit to the decoding mode corresponding to the first error correction encoding mode.

The decoding unit is configured to decode the service bitstream received by the device, to obtain the service data.

The receiving unit is configured to process the service data obtained through decoding by the decoding unit.

The device shown in FIG. 7 may further include a serializer/deserializer (SerDes) interface. After the bitstream received by the device passes through the SerDes interface, the bitstream is transmitted to the identification unit. The bitstream obtained through encoding by the encoding unit is transmitted to another device after passing through the SerDes interface. The SerDes interface in this embodiment of this application may be any high-speed serial interface, for example, a peripheral component interconnect express (PCIe) interface or an Ethernet interface.

All the units shown in FIG. 7 may belong to a physical layer (PHY) module (not shown in FIG. 7), or all the units except the SerDes module shown in FIG. 7 may belong to a physical layer (PHY) module. In addition, the PHY module may be further divided into a physical coding sublayer (PCS) module and a media access control (MAC) module. The identification unit, the parameter determining unit, the encoding unit, the decoding unit, and the control unit may all belong to the PCS module, and the sending unit and the receiving unit may belong to the MAC module.

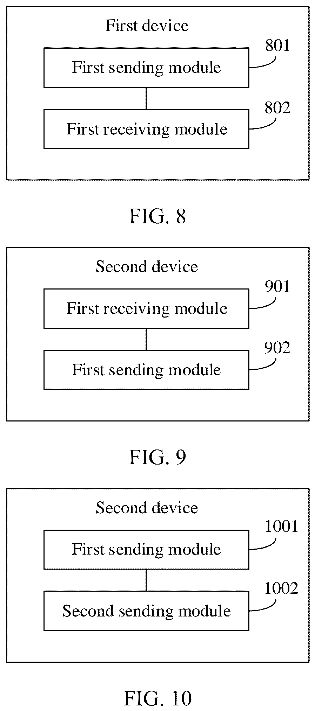

Based on the communication method provided in embodiments of this application, an embodiment of this application further provides a first device. For example, as shown in FIG. 8, the first device includes a first sending module 801 and a first receiving module 802. The first sending module 801 is configured to: when a link from the first device to a second device is in a service bitstream transmission state, send, by the first device, a first control bitstream that includes a first error correction encoding mode to the second device. The first receiving module 802 is configured to receive a service bitstream that is sent by the second device and that is encoded in the first error correction encoding mode.

It can be learned from the foregoing content that when the link from the first device to the second device is in the service bitstream transmission state, the first device may send the first control bitstream to the second device, to indicate the second device to encode the service bitstream in the first error correction encoding mode. This implements setting of the first error correction encoding mode. In this way, the first device does not need to suspend transmission of a service bitstream to enter a training state. This can avoid a problem that the first device cannot transmit the service bitstream to the second device when the first device enters the training state, and reduce impact of setting the error correction encoding mode on a service from the first device to the second device.

Optionally, the first device further includes a second sending module and a second receiving module. The second sending module is configured to: when the link from the first device to the second device is in the service bitstream transmission state, send a second control bitstream to the second device, where the second control bitstream includes a second error correction encoding mode. The second receiving module is configured to receive a third control bitstream sent by the second device, where the third control bitstream includes a third error correction encoding mode. Then, the first device may select one mode from the second error correction encoding mode and the third error correction encoding mode as the first error correction encoding mode. It can be learned that the first device and the second device may determine the first error correction encoding mode through negotiation.

Optionally, the third error correction encoding mode is an error correction encoding mode with a stronger error correction capability in the second error correction encoding mode and an error correction encoding mode used by the second device, and the first error correction encoding mode is an error correction encoding mode with a stronger error correction capability in the second error correction encoding mode and the third error correction encoding mode. Certainly, when the third error correction encoding mode is the error correction encoding mode with the stronger error correction capability in the second error correction encoding mode and the error correction encoding mode used by the second device, the first error correction encoding mode may alternatively not be the error correction encoding mode with the stronger error correction capability in the second error correction encoding mode and the third error correction encoding mode. When the first error correction encoding mode is the error correction encoding mode with the stronger error correction capability in the second error correction encoding mode and the third error correction encoding mode, the third error correction encoding mode may alternatively not be the error correction encoding mode with the stronger error correction capability in the second error correction encoding mode and the error correction encoding mode used by the second device.

Optionally, the first device further includes: a third receiving module, configured to receive a test bitstream sent by the second device; a first determining module, configured to determine a parameter of a link from the second device to the first device based on the test bitstream; and a second determining module, configured to determine the second error correction encoding mode based on the parameter of the link from the second device to the first device. The second error correction encoding mode is an error correction encoding mode selected from a plurality of error correction encoding modes based on the parameter of the link from the second device to the first device, and the first error correction encoding mode is obtained through negotiation based on the second error correction encoding mode. Therefore, the first error correction encoding mode is an error correction encoding mode that better adapts to the link from the second device to the first device in the plurality of error correction encoding modes. Therefore, the first error correction encoding mode matches the link from the second device to the first device well. In this way, a problem of a high bit error ratio or large power consumption delay caused by low matching between the error correction encoding mode used by the second device and the link from the second device to the first device can be avoided.

Optionally, the test bitstream is any one of a plurality of bitstreams. The first device further includes: a fourth receiving module, configured to receive a fifth control bitstream that includes an identifier of the test bitstream and that is sent by the second device. The third receiving module may receive, based on the identifier of the test bitstream, the test bitstream sent by the second device. In this case, the test bitstream can be flexibly switched among the plurality of bitstreams.

Optionally, a control bitstream (for example, the first control bitstream or the third control bitstream) sent by the first device to the second device is inserted into the service bitstream sent by the first device to the second device. The first device may send the service bitstream to the second device in a service bitstream sending periodicity, and the first device may further send the control bitstream to the second device in a non-service bitstream sending periodicity (the non-service bitstream sending periodicity is also a control bitstream sending periodicity). In this case, the first control bitstream is inserted into the service bitstream sent by the first device to the second device. When sending the first control bitstream to the second device, the first sending module may send the first control bitstream to the second device based on the periodicity in which the first device sends the service bitstream to the second device. It may be understood that the first device may alternatively not periodically send the service bitstream to the second device. In this case, the first device may not send the first control bitstream to the second device based on the periodicity in which the first device sends the service bitstream to the second device.

Optionally, the first device further includes a decoding module, configured to: after receiving the service bitstream that is sent by the second device and that is encoded in the first error correction encoding mode, decode the service bitstream sent by the second device in a decoding mode corresponding to the first error correction encoding mode.

Optionally, the first device further includes a fifth receiving module, configured to receive a fourth control bitstream sent by the second device, where the fourth control bitstream indicates that the second device has encoded the service bitstream in the first error correction encoding mode. The decoding module may decode, based on the fourth control bitstream in the decoding mode corresponding to the first error correction encoding mode, the service bitstream sent by the second device.

Optionally, the first device further includes a third sending module, configured to: when the link from the first device to the second device is in the service bitstream transmission state, send a sixth control bitstream to the second device, where the sixth control bitstream includes the periodicity in which the first device sends the service bitstream to the second device (or a periodicity in which the first device sends the control bitstream to the second device). The periodicity in which the first device sends the service bitstream to the second device (or the periodicity in which the first device sends the control bitstream to the second device) is one of a plurality of periodicities. Then, the second device may receive, based on the periodicity included in the sixth control bitstream, the service bitstream and the control bitstream that are sent by the first device. In this way, the periodicity in which the first device sends the service bitstream to the second device (or the periodicity in which the first device sends the control bitstream to the second device) can be flexibly switched among the plurality of periodicities.

Optionally, the first control bitstream includes a header and a payload that are sequentially transmitted. The header is used to locate a start location and an end location of the first control bitstream, and the payload includes the first error correction encoding mode. For example, the payload includes a control type field and a control content field. The control type field includes a type of content included in the control content field, and the control content field includes the first error correction encoding mode. The control type field is transmitted before the control content field, or the control type field is transmitted after the control content field. The header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) = *x*¹⁰ *+ x*⁸ + *x*⁵ + *x*⁴ + *x*² *+ x +*1*,* where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

An embodiment of this application further provides a second device. As shown in FIG. 9, the second device includes: a first receiving module 901, configured to: when a link from a first device to the second device is in a service bitstream transmission state, receive a first control bitstream that is sent by the first device and that includes a first error correction encoding mode; and a first sending module 902, configured to send, to the first device, a service bitstream encoded in the first error correction encoding mode.

Optionally, the second device further includes: a second receiving module, configured to: when the link from the first device to the second device is in the service bitstream transmission state, receive a second control bitstream sent by the first device, where the second control bitstream includes a second error correction encoding mode; and a second sending module, configured to send a third control bitstream to the first device, where the third control bitstream includes a third error correction encoding mode. The first error correction encoding mode is a mode selected by the first device from the second error correction encoding mode and the third error correction encoding mode.

Optionally, the method meets at least one of the following conditions: the third error correction encoding mode is a mode with a stronger error correction capability in the second error correction encoding mode and an error correction encoding mode used by the second device; and the first error correction encoding mode is a mode with a stronger error correction capability in the second error correction encoding mode and the third error correction encoding mode.

Optionally, the second device further includes: a third sending module, configured to send a test bitstream to the first device. The second error correction encoding mode is determined based on a parameter of a link from the second device to the first device, and the parameter of the link from the second device to the first device is determined based on the test bitstream.

Optionally, the test bitstream is any one of a plurality of bitstreams. The second device further includes: a fourth sending module, configured to send a fifth control bitstream that includes an identifier of the test bitstream to the first device. Then, the first device may receive, based on the identifier of the test bitstream, the test bitstream sent by the second device. In this case, the test bitstream can be flexibly switched among the plurality of bitstreams.

Optionally, the first control bitstream is inserted into a service bitstream sent by the first device to the second device, and the first receiving module may receive, based on a periodicity in which the first device sends the service bitstream to the second device, the first control bitstream sent by the first device.

Optionally, the second device may further include a fifth sending module, configured to send a fourth control bitstream to the first device, where the fourth control bitstream indicates that the second device has encoded the service bitstream in the first error correction encoding mode.

Optionally, the second device further includes a third receiving module, configured to: when the link from the first device to the second device is in the service bitstream transmission state, receive a sixth control bitstream sent by the first device, where the sixth control bitstream includes the periodicity in which the first device sends the service bitstream to the second device (or a periodicity in which the first device sends the control bitstream to the second device). The periodicity in which the first device sends the service bitstream to the second device (or the periodicity in which the first device sends the control bitstream to the second device) is one of a plurality of periodicities. Then, the second device may receive, based on the periodicity included in the sixth control bitstream, the service bitstream and the control bitstream that are sent by the first device. For example, the first receiving module may receive the first control bitstream based on the periodicity. In this way, the periodicity in which the first device sends the service bitstream to the second device (or the periodicity in which the first device sends the control bitstream to the second device) can be flexibly switched among the plurality of periodicities.

Optionally, the first control bitstream includes a header and a payload that are sequentially transmitted. The header is used to locate a start location and an end location of the first control bitstream, and the payload indicates a target mode.

Optionally, the payload includes a control type field and a control content field. The control type field includes a type of content included in the control content field, and the control content field includes the first error correction encoding mode.

Optionally, the header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) *= x*¹⁰ + *x*⁸ + *x*⁵ + *x*⁴ + *x*² *+x*+1, where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

An embodiment of this application further provides a second device. As shown in FIG. 10, the second device includes: a first sending module 1001, configured to: when a link from the second device to a first device is in a service bitstream transmission state, send a first control bitstream that includes a first error correction encoding mode to the first device; and a second sending module 1002, configured to send, to the first device, a service bitstream encoded in the first error correction encoding mode.

Optionally, the first device further includes a third sending module, configured to: when the link from the second device to the first device is in the service bitstream transmission state, send a second control bitstream to the first device, where the second control bitstream includes a second error correction encoding mode. The first device further includes a first receiving module, configured to receive a third control bitstream sent by the first device, where the third control bitstream includes a third error correction encoding mode. Then, the second device may select one mode from the second error correction encoding mode and the third error correction encoding mode as the first error correction encoding mode.

The third error correction encoding mode is an error correction encoding mode with a stronger error correction capability in the second error correction encoding mode and an error correction encoding mode used by the first device, and the first error correction encoding mode is an error correction encoding mode with a stronger error correction capability in the second error correction encoding mode and the third error correction encoding mode. Certainly, when the third error correction encoding mode is the error correction encoding mode with the stronger error correction capability in the second error correction encoding mode and the error correction encoding mode used by the first device, the first error correction encoding mode may alternatively not be an error correction encoding mode with a stronger error correction capability in the second error correction encoding mode and the third error correction encoding mode. When the first error correction encoding mode is the error correction encoding mode with the stronger error correction capability in the second error correction encoding mode and the third error correction encoding mode, the third error correction encoding mode may alternatively not be the error correction encoding mode with the stronger error correction capability in the second error correction encoding mode and the error correction encoding mode used by the first device.

Optionally, the second device further includes: a fourth sending module, configured to send a test bitstream to the first device; and a second receiving module, configured to receive a ninth control bitstream that is sent by the first device and that includes a parameter of the link from the second device to the first device, where the parameter of the link of the first device is determined based on the test bitstream. Then, the second device can determine the second error correction encoding mode based on the parameter of the link from the second device to the first device.

Optionally, the test bitstream is any one of a plurality of bitstreams. The second device further includes a fifth sending module, configured to send a fifth control bitstream that includes an identifier of the test bitstream to the first device. Then, the first device may receive, based on the identifier of the test bitstream, the test bitstream sent by the second device.

Optionally, a control bitstream (for example, the first control bitstream or the third control bitstream) sent by the second device to the first device is inserted into a service bitstream sent by the second device to the first device. The second device may send the service bitstream to the first device in a service bitstream sending periodicity, and the second device may further send the control bitstream to the first device in a non-service bitstream sending periodicity (the non-service bitstream sending periodicity is also a control bitstream sending periodicity). In this case, the first control bitstream is inserted into the service bitstream sent by the second device to the first device. The first sending module is configured to send the first control bitstream to the first device based on the periodicity in which the second device sends the service bitstream to the first device.

After setting a used error correction decoding mode to a decoding mode corresponding to the first error correction encoding mode, the first device may send a fourth control bitstream to the second device. Correspondingly, the second device includes a third receiving module, configured to receive the fourth control bitstream sent by the first device. The fourth control bitstream indicates that the first device has decoded the service bitstream in the decoding mode corresponding to the first error correction encoding mode. Then, the second device may encode the service bitstream based on the fourth control bitstream in the first error correction encoding mode.

Optionally, the second device further includes: a sixth sending module, configured to: when the link from the second device to the first device is in the service bitstream transmission state, send a sixth control bitstream to the first device, where the sixth control bitstream includes the periodicity in which the second device sends the service bitstream to the first device (or a periodicity in which the second device sends the control bitstream to the first device). The periodicity in which the second device sends the service bitstream to the first device (or the periodicity in which the second device sends the control bitstream to the first device) is one of a plurality of periodicities. Then, the first device may receive, based on the periodicity included in the sixth control bitstream, the service bitstream and the control bitstream that are sent by the second device.

Optionally, the first control bitstream includes a header and a payload that are sequentially transmitted. The header is used to locate a start location and an end location of the first control bitstream, and the payload includes the first error correction encoding mode. For example, the payload includes a control type field and a control content field. The control type field includes a type of content included in the control content field, and the control content field includes the first error correction encoding mode. The control type field is transmitted before the control content field, or the control type field is transmitted after the control content field. The header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) = *x*¹⁰ + *x*⁸ + *x*⁵ + *x*⁴ + *x² +x+*1*,* where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

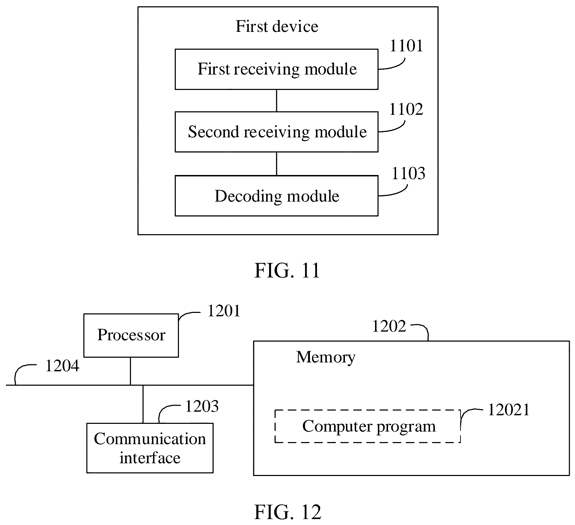

An embodiment of this application further provides a first device. As shown in FIG. 11, the first device includes: a first receiving module 1101, configured to: when a link from a second device to the first device is in a service bitstream transmission state, receive a first control bitstream that includes a first error correction encoding mode and that is sent by the second device; a second receiving module 1102, configured to receive a service bitstream that is encoded in the first error correction encoding mode and that is sent by the second device; and a decoding module 1103, configured to decode the service bitstream in a decoding mode corresponding to the first error correction encoding mode.

Optionally, the first device further includes: a third receiving module, configured to: when the link from the second device to the first device is in the service bitstream transmission state, receive a second control bitstream sent by the second device, where the second control bitstream includes a second error correction encoding mode; and a first sending module, configured to send a third control bitstream to the second device, where the third control bitstream includes a third error correction encoding mode. The first error correction encoding mode is a mode selected by the second device from the second error correction encoding mode and the third error correction encoding mode.

Optionally, the method meets at least one of the following conditions: the third error correction encoding mode is a mode with a stronger error correction capability in the second error correction encoding mode and an error correction encoding mode used by the second device; and the first error correction encoding mode is a mode with a stronger error correction capability in the second error correction encoding mode and the third error correction encoding mode.

Optionally, the first device further includes: a fourth receiving module, configured to receive a test bitstream sent by the second device; a first determining module, configured to determine a parameter of the link from the second device to the first device based on the test bitstream; and a second sending module, configured to send, to the second device, a ninth control bitstream that includes the parameter of the link from the second device to the first device. Then, the second device can determine the second error correction encoding mode based on the parameter of the link from the second device to the first device.

Optionally, the test bitstream is any one of a plurality of bitstreams. Before sending the test bitstream to the first device, the second device may further send a fifth control bitstream that includes an identifier of the test bitstream to the first device. Correspondingly, the first device further includes a fifth receiving module, configured to receive the fifth control bitstream. Then, the fourth receiving module in the first device can receive, based on the identifier of the test bitstream, the test bitstream sent by the second device.

Optionally, the first control bitstream is inserted into the service bitstream sent by the second device to the first device, and the first receiving module in the first device may receive, based on a periodicity in which the second device sends the service bitstream to the first device, the first control bitstream sent by the second device.

Optionally, after the first device receives the first control bitstream sent by the second device, the first device may further send a fourth control bitstream to the second device. The first device further includes a third sending module configured to send the fourth control bitstream, where the fourth control bitstream indicates that the first device has decoded the service bitstream in the decoding mode corresponding to the first error correction encoding mode.

Optionally, before the second device sends any control bitstream (for example, the first control bitstream) to the first device, when the link from the second device to the first device is in the service bitstream transmission state, the second device may further send a sixth control bitstream to the first device. Correspondingly, the first device further includes a sixth receiving module configured to receive the sixth control bitstream, where the sixth control bitstream includes the periodicity in which the second device sends the service bitstream to the first device (or a periodicity in which the second device sends the control bitstream to the first device). The periodicity in which the second device sends the service bitstream to the first device (or the periodicity in which the second device sends the control bitstream to the first device) is one of a plurality of periodicities. Then, the first device may receive, based on the periodicity included in the sixth control bitstream, the service bitstream and the control bitstream that are sent by the second device. For example, the first receiving module may receive the first control bitstream based on the periodicity.

Optionally, the first control bitstream includes a header and a payload that are sequentially transmitted. The header is used to locate a start location and an end location of the first control bitstream, and the payload indicates a target mode.

Optionally, the payload includes a control type field and a control content field. The control type field includes a type of content included in the control content field, and the control content field includes the first error correction encoding mode.

Optionally, the header includes at least one type identifier field and a tail field that are sequentially transmitted. The type identifier field is used to identify a control bitstream type, and the tail field indicates the end location of the first control bitstream.

Optionally, a codeword of the first control bitstream is an error correction code. In this way, after receiving the control bitstream whose codeword is the error correction code, the device may further perform error correction on the control bitstream based on the codeword, to improve accuracy of control bitstream transmission. It may be understood that the codeword may alternatively not be an error correction code. This is not limited in embodiments of this application.

For example, the codeword of the first control bitstream is a BCH with a Hamming distance of 8. The codeword includes 16 bits, and a 6^{th} least significant bit to a 15^{th} least significant bit in the 16 bits are obtained by encoding five least significant bits in the 16 bits based on a generator polynomial. One most significant bit in the 16 bits is obtained by performing even parity check on the 15 least significant bits in the 16 bits. The generator polynomial is *g*(*x*) = *x*¹⁰ + *x*⁸ + *x*⁵ + *x*⁴ + *x*² *+x+*1*,* where x represents a variable in the generator polynomial.

Optionally, quantities of 0 bits and 1 bits in the codeword of the first control bitstream are the same. When the quantities of 0 bits and 1 bits in the codeword of the control bitstream are the same, the codeword meets a direct current equalization condition, and this is conducive to performing serial-to-parallel conversion by the device after sending and receiving the bitstream. It may be understood that the quantities of 0 bits and 1 bits in the codeword may alternatively be different.

Optionally, the codeword of the first control bitstream supports multi-level pulse amplitude modulation or NRZ modulation.

Optionally, the error correction encoding mode is an FEC encoding mode or a pre-encoding mode.

Optionally, the first control bitstream is a UAM bitstream.

An embodiment of this application further provides a communication device. The communication device includes a processor and a memory. The memory stores instructions. The processor is configured to execute the instructions to implement the operation performed by the first device or the second device in any communication method provided in embodiments of this application.

Refer to FIG. 12. The communication device may include a processor 1201, a memory 1202, a communication interface 1203, and a bus 1204. The bus 1204 is configured to connect the processor 1201, the memory 1202, and the communication interface 1203. A communication connection to another device may be implemented through the communication interface 1203 (which may be wired or wireless). The memory 1202 stores a computer program 12021, and the computer program 12021 is configured to implement various application functions. When the modules in the device shown in FIG. 7, FIG. 8, FIG. 9, or FIG. 10 are implemented in a form of software modules, programs corresponding to the software modules may be stored in the memory 1202 of the communication device.

It should be understood that in this embodiment of this application, the processor 1201 may be a CPU, or the processor 1201 may be another general-purpose processor, a digital signal processor (DSP), an application-specific integrated circuit (ASIC), a field programmable gate array (FPGA), a GPU or another programmable logic device, a discrete gate or a transistor logic device, a discrete hardware component, or the like. The general-purpose processor may be a microprocessor, any conventional processor, or the like.

The processor 1201 may alternatively be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof.

The memory 1202 may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), a portable read-only memory (CD-ROM), a flash memory, a hard disk drive (HDD), a solid-state drive (SSD), or a flash memory. The volatile memory may be a random access memory (RAM), used as an external cache. By way of example, and not limitation, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). The memory 1202 may further include any combination of the foregoing types of memories.

The bus 1204 may further include a power bus, a control bus, a status signal bus, and the like, in addition to a data bus. However, for clear description, various types of buses in the figure are marked as the bus 1204.

An embodiment of this application further provides a chip. The chip includes a programmable logic circuit and program instructions. The programmable logic circuit is configured to execute the program instructions, to implement the operation performed by the first device or the second device in any communication method provided in embodiments of this application.

An embodiment of this application further provides a communication system. The communication system includes the first device and the second device. For example, the communication system includes the first device shown in FIG. 7 and the second device shown in FIG. 8. For another example, the communication system includes the second device shown in FIG. 9 and the first device shown in FIG. 10.

An embodiment of this application further provides a computer-readable storage medium. The computer-readable storage medium stores instructions. When the instructions are executed by a computer, the operation performed by the first device or the second device in any communication method provided in embodiments of this application is implemented.

This application provides a computer program product including instructions. When the computer program product runs on a computer, the computer is enabled to perform the operation performed by the first device or the second device in any communication method provided in embodiments of this application.

All or some of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by the computer, or includes a data storage apparatus, for example, a server or a data center, integrating one or more usable media. The usable medium may be a magnetic medium (for example, a floppy disk, a hard disk, or a magnetic tape), an optical medium, a semiconductor medium (for example, a solid-state drive), or the like.

In this application, the terms "first", "second", and the like are merely intended for description, but cannot be understood as an indication or implication of relative importance. The term "at least one" means one or more, and the term "a plurality of" means two or more, unless expressly limited otherwise.

Different types of embodiments such as the method embodiments and the device embodiments provided in embodiments of this application may be mutually referred. This is not limited in embodiments of this application. A sequence of the operations of the method embodiments provided in embodiments of this application can be properly adjusted, and the operations can alternatively be correspondingly added or deleted based on a situation. Any method readily figured out by a person skilled in the art within the technical scope disclosed in this application shall fall within the protection scope of this application. Therefore, details are not described.

In the corresponding embodiments provided in this application, it should be understood that the disclosed device and the like may be implemented in other composition manners. For example, the described device embodiments are merely examples. For example, division into modules is merely logical function division and may be other division during actual implementation. For example, a plurality of modules may be combined or may be integrated into another system, or some features may be ignored or not be performed. In addition, the displayed or discussed mutual couplings or direct couplings or communication connections may be implemented through some interfaces. The indirect couplings or communication connections between the apparatuses or modules may be implemented in electronic or other forms.

The modules, units, or subunits described as separate parts may or may not be physically separate, and parts described as modules, units, or subunits may or may not be physical units, may be located in one position, or may be distributed on a plurality of devices. Some or all of the units may be selected based on actual requirements to achieve the objectives of the solutions of embodiments.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
when a link from a first device to a second device is in a service bitstream transmission state, sending, by the first device, a first control bitstream to the second device, wherein the first control bitstream comprises a first error correction encoding mode; and
receiving, by the first device, a service bitstream that is sent by the second device and that is encoded in the first error correction encoding mode.

2. The method according to claim 1, wherein before sending, by the first device, the first control bitstream to the second device, the method further comprises:
when the link from the first device to the second device is in the service bitstream transmission state, sending, by the first device, a second control bitstream to the second device, wherein the second control bitstream comprises a second error correction encoding mode; and
receiving, by the first device, a third control bitstream sent by the second device, wherein the third control bitstream comprises a third error correction encoding mode, wherein
the first error correction encoding mode is a mode selected by the first device from the second error correction encoding mode and the third error correction encoding mode.

3. The method according to claim 2, wherein the method meets at least one of the following conditions:
the third error correction encoding mode is a mode with a stronger error correction capability in the second error correction encoding mode and an error correction encoding mode used by the second device; and
the first error correction encoding mode is a mode with a stronger error correction capability in the second error correction encoding mode and the third error correction encoding mode.

4. The method according to claim 2 or 3, wherein before sending, by the first device, the second control bitstream to the second device, the method further comprises:
receiving, by the first device, a test bitstream sent by the second device;
determining, by the first device, a parameter of a link from the second device to the first device based on the test bitstream; and
determining, by the first device, the second error correction encoding mode based on the parameter of the link from the second device to the first device.

5. The method according to any one of claims 1 to 4, wherein the first control bitstream is inserted into a service bitstream sent by the first device to the second device, and sending, by the first device, the first control bitstream to the second device comprises:
sending, by the first device, the first control bitstream to the second device based on a periodicity in which the first device sends the service bitstream to the second device.

6. The method according to any one of claims 1 to 5, wherein after receiving, by the first device, the service bitstream that is sent by the second device and that is encoded in the first error correction encoding mode, the method further comprises:
decoding, by the first device in a decoding mode corresponding to the first error correction encoding mode, the service bitstream sent by the second device.

7. The method according to claim 6, wherein after sending, by the first device, the first control bitstream to the second device, the method further comprises:
receiving, by the first device, a fourth control bitstream sent by the second device, wherein the fourth control bitstream indicates that the second device has encoded the service bitstream in the first error correction encoding mode; and
decoding, by the first device in the decoding mode corresponding to the first error correction encoding mode, the service bitstream sent by the second device comprises:
decoding, by the first device based on the fourth control bitstream in the decoding mode corresponding to the first error correction encoding mode, the service bitstream sent by the second device.

8. The method according to any one of claims 1 to 7, wherein the first control bitstream comprises a header and a payload that are sequentially transmitted, the header is used to locate a start location and an end location of the first control bitstream, and the payload comprises the first error correction encoding mode.

9. The method according to claim 8, wherein the payload comprises a control type field and a control content field; and
the control type field comprises a type of content comprised in the control content field, and the control content field comprises the first error correction encoding mode.

10. The method according to claim 8 or 9, wherein the header comprises at least one type identifier field and a tail field that are sequentially transmitted; and
the type identifier field is used to identify a control bitstream type, and the tail field indicates the end location of the first control bitstream.

11. The method according to any one of claims 1 to 10, wherein a codeword of the first control bitstream is a Bose-Chaudhuri-Hocquenghem, BCH, code with a Hamming distance of 8; and
the codeword comprises 16 bits, and a 6^{th} least significant bit to a 15^{th} least significant bit in the 16 bits are obtained by encoding five least significant bits in the 16 bits based on a generator polynomial; and one most significant bit in the 16 bits is obtained by performing even parity check on the 15 least significant bits in the 16 bits; and the generator polynomial is *g*(*x*) = *x*¹⁰ *+ x*⁸ *+ x*⁵ *+ x*⁴ *+ x*² *+ x +*1*,* wherein x represents a variable in the generator polynomial.

12. A communication method, wherein the method comprises:
when a link from a first device to a second device is in a service bitstream transmission state, receiving, by the second device, a first control bitstream sent by the first device, wherein the first control bitstream comprises a first error correction encoding mode; and
sending, by the second device to the first device, a service bitstream encoded in the first error correction encoding mode.

13. The method according to claim 12, wherein before receiving, by the second device, the first control bitstream sent by the first device, the method further comprises:
when the link from the first device to the second device is in the service bitstream transmission state, receiving, by the second device, a second control bitstream sent by the first device, wherein the second control bitstream comprises a second error correction encoding mode; and
sending, by the second device, a third control bitstream to the first device, wherein the third control bitstream comprises a third error correction encoding mode, wherein
the first error correction encoding mode is a mode selected by the first device from the second error correction encoding mode and the third error correction encoding mode.

14. The method according to claim 13, wherein the method meets at least one of the following conditions:
the third error correction encoding mode is a mode with a stronger error correction capability in the second error correction encoding mode and an error correction encoding mode used by the second device; and
the first error correction encoding mode is a mode with a stronger error correction capability in the second error correction encoding mode and the third error correction encoding mode.

15. The method according to claim 13 or 14, wherein before receiving, by the second device, the second control bitstream sent by the first device, the method further comprises:
sending, by the second device, a test bitstream to the first device, wherein the second error correction encoding mode is determined based on a parameter of a link from the second device to the first device, and the parameter of the link from the second device to the first device is determined based on the test bitstream.

16. The method according to any one of claims 12 to 15, wherein the first control bitstream is inserted into a service bitstream sent by the first device to the second device, and receiving, by the second device, the first control bitstream sent by the first device comprises:
receiving, by the second device based on a periodicity in which the first device sends the service bitstream to the second device, the first control bitstream sent by the first device.

17. The method according to any one of claims 12 to 16, wherein after receiving, by the second device, the first control bitstream sent by the first device, the method further comprises:
sending, by the second device, a fourth control bitstream to the first device, wherein the fourth control bitstream indicates that the second device has encoded the service bitstream in the first error correction encoding mode.

18. The method according to any one of claims 12 to 17, wherein the first control bitstream comprises a header and a payload that are sequentially transmitted, the header is used to locate a start location and an end location of the first control bitstream, and the payload comprises the first error correction encoding mode.

19. A first device, wherein the first device comprises:
a first sending module, configured to: when a link from the first device to a second device is in a service bitstream transmission state, send a first control bitstream to the second device, wherein the first control bitstream comprises a first error correction encoding mode; and
a first receiving module, configured to receive a service bitstream that is sent by the second device and that is encoded in the first error correction encoding mode.

20. A second device, wherein the second device comprises:
a first receiving module, configured to: when a link from a first device to the second device is in a service bitstream transmission state, receive a first control bitstream sent by the first device, wherein the first control bitstream comprises a first error correction encoding mode; and
a first sending module, configured to send a service bitstream encoded in the first error correction encoding mode to the first device.
